(19) Europäisches Patentamt
European Patent Office
Office européen des brevets

(11) **EP 4 513 384 A1**

(12) **EUROPEAN PATENT APPLICATION**
published in accordance with Art. 153(4) EPC

(43) Date of publication:
26.02.2025 Bulletin 2025/09

(21) Application number: 23802896.3

(22) Date of filing: 09.05.2023

(51) International Patent Classification (IPC):
**G06N 3/08** (2023.01)        **G06N 3/063** (2023.01)
**G06N 3/04** (2023.01)

(52) Cooperative Patent Classification (CPC):
Y02D 10/00

(86) International application number:
**PCT/CN2023/092961**

(87) International publication number:
**WO 2023/217127 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 13.05.2022 CN 202210521841

(71) Applicant: **Huawei Technologies Co., Ltd.**
**Shenzhen, Guangdong 518129 (CN)**

(72) Inventors:
• **LI, Yinchuan**
  **Shenzhen, Guangdong 518129 (CN)**
• **SHAO, Yunfeng**
  **Shenzhen, Guangdong 518129 (CN)**
• **LI, Wenqian**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **CAUSATION DETERMINATION METHOD AND RELATED DEVICE**

(57) A causality determining method relates to the field of artificial intelligence. The method includes: obtaining first information that is obtained by predicting a plurality of variables by a generative flow model and that indicates causality between the plurality of variables; and predicting second information of the plurality of variables based on the first information and by using the generative flow model, where the second information indicates that first causality exists between a first variable and a second variable in the plurality of variables, and the first informa- tion indicates that the first causality does not exist between the first variable and the second variable. In this application, causality between variables is identified in a sequence generation manner. With iterative update of the generative flow model, the generative flow model can have a capability of generating a good causality sequence, and a large quantity of causal sequences does not need to be sampled to select a good causality sequence. This reduces computing capability overheads and improves a convergence speed of the model.

Obtain first information of a plurality of variables, where the first information indicates causality between the plurality of variables — 701

Predict second information of the plurality of variables based on the first information and by using a first neural network in a generative model, where the second information indicates that first causality exists between a first variable and a second variable in the plurality of variables, the first information indicates that the first causality does not exist between the first variable and the second variable, and the first variable is different from the second variable — 702

FIG. 7

EP 4 513 384 A1

## Description

This application claims priority to Chinese Patent Application No. 202210521841.1, filed with the China National Intellectual Property Administration on May 13, 2022 and entitled "CAUSALITY DETERMINING METHOD AND RELATED DEVICE", which is incorporated herein by reference in its entirety.

## TECHNICAL FIELD

This application relates to the field of artificial intelligence, and in particular, to a causality determining method and a related device.

## BACKGROUND

Causality (causality or causation) is impact of a variable (namely, a "cause") on another variable (namely, an "outcome"). The latter variable is considered as a result of the former variable.

During existing implementation, causality between variables in a dataset is identified based on reinforcement learning. In this technology, a causal sequence with a highest score is found through reinforcement learning. In this technology, the dataset is first encoded, and each column is encoded as a status. In this case, orders of all statuses are random. Then, a Markov chain is used to determine the order for decoding, to generate an action sequence $(a_0, a_1, \ldots, a_T)$. The sequence corresponds to a causal sequence. A graph corresponding to each causal sequence may be constrained as a directed acyclic graph according to a directed acyclic constraint function. In the conventional technology, accurate causality is selected by traversing a large quantity of causal sequences and based on a score of each causal sequence. In other words, a larger quantity of causal sequences needs to be traversed, to obtain more accurate causality. As search space (namely, a data amount and a quantity of variables) increases, a large amount of computing power and runtime are consumed.

## SUMMARY

This application provides a causality determining method, to reduce computing power overheads and improve a convergence speed of a model.

According to a first aspect, this application provides a causality determining method. The method includes: obtaining first information of a plurality of variables, where the first information may be an intermediate output obtained by predicting causality between the plurality of variables in a dataset by a first neural network in a generative flow model, and the first information indicates the causality between the plurality of variables; and predicting second information of the plurality of variables based on the first information and by using the first neural network in the generative flow model, where the second information indicates that first causality exists between a first variable and a second variable in the plurality of variables, the first information indicates that the first causality does not exist between the first variable and the second variable, and the first variable is different from the second variable. This is equivalent to that the second information is other causality that is predicted based on the first information, and the second information includes more causality than the first information.

A to-be-identified dataset (including a plurality of pieces of data) may be obtained, and the dataset (or a plurality of variables in the dataset) is input to a model (for example, the generative flow model (which is also referred to as a flow-based generative model or a generative model) in this embodiment of this application) for determining causality, to identify causality between the plurality of variables in the dataset (including the plurality of pieces of data). In one iteration of the generative flow model, the causality between the plurality of variables may be predicted for a plurality of times. A current time of causality prediction is performed based on causality predicted last time, until a predicted result meets a termination condition of one iteration. A result obtained in the "current time" of causality prediction includes the causality obtained in the "last time" of causality prediction, and further includes newly predicted causality within a variable pair. The first neural network performs a next time of causality prediction based on causality predicted in a time of prediction in one iteration. For example, the "causality predicted in a time of prediction" may be the first information, and the first neural network may predict the second information of the plurality of variables based on the first information (for example, inputting the first information (or an embedding representation corresponding to the first information) to the first neural network). The second information includes more (for example, a quantity of variable pairs included in the second information exceeds one or more than that included in the first information) variable pairs between which causality exists than the first information.

In a possible implementation, the causality between the plurality of variables may include causality within each variable pair in the plurality of variables, and the variable pair may include two variables. The causality within the variable pair may be understood as causality between the variables included in the variable pair.

In a possible implementation, causality between variables (a variable A and a variable B are used as an example) may be understood as that the variable A causes the variable B, in other words, the variable A is used as a dependent variable of the variable B, and the variable B is used as an outcome variable of the variable A. In other words, when other conditions remain unchanged, a change of the variable A causes a change of the variable B.

In a possible implementation, the first information may indicate direct causality between variables, or may indicate indirect causality between variables. For example, the first information may indicate that the variable A causes the variable B, and the variable B causes a variable C. Further, the first information may obtain, based on direct causality in which "the variable A causes the variable B, and the variable B causes the variable C", indirect causality in which the variable A causes the variable C. This is equivalent to that the first information may also indicate that the variable A causes the variable C. The indirect causality between the variables can be understood as that a variable is an ancestor node (parent node that is not directly connected) of another variable.

It can be learned that, the generative flow model in this embodiment of this application does not directly obtain a plurality of pieces of candidate causality through sampling, and select good causality from the plurality of pieces of candidate causality. Instead, causality between a plurality of variables is sequentially generated in a sequence generation manner in each iteration. Each time of generation is performed based on a result generated last time, and causality is enriched as a causality generation process proceeds. In this embodiment, causality between variables is identified in a sequence generation manner. With iterative update of the generative flow model, the generative flow model can have a capability of generating a good causality sequence, and a large quantity of causal sequences does not need to be sampled to select a good causality sequence. This can further reduce computing capability overheads and improve a convergence speed of the model.

In a possible implementation, the first information indicates that causality exists between X variable pairs in the plurality of variables, and the second information indicates that causality exists between X+1 variable pairs. The X+1 variable pairs include the X variable pairs and a variable pair including the first variable and the second variable, and X is a positive integer. In other words, the second information includes the causality indicated by the first information and newly predicted causality (the first causality).

In a possible implementation, the variable may be a feature of data.

In a possible implementation, the variable may be a feature dimension of image data, for example, may be a semantic meaning in an image, for example, an ear region or a glasses region in an image including a portrait, or may be a pixel channel in an image, for example, an R channel, a G channel, or a B channel. Correspondingly, data of the variable may be data of the image data in the feature dimension, for example, a pixel value of the ear region or a pixel value of the glasses region in the image including a portrait, or may be a pixel value of the R channel, a pixel value of the G channel, or a pixel value of the B channel of the image. For another example, the variable may be a type of partial segment of a chip, and the data of the variable may be an image of a type of partial segment of the chip.

In a possible implementation, the variable may be a feature dimension of text data, for example, may be a root cause of a fault. For example, the variable may be a KPI of a communication network or a node invoked by a computer transaction. Correspondingly, data of the variable may be a specific value of the KPI of the communication network, information about the node invoked by the computer transaction, or the like.

In a possible implementation, in a recommendation scenario, the variable may be attribute information of an item, attribute information of a user, operation behavior of a user, or the like.

In a possible implementation, the variable may alternatively be a feature dimension of audio data a feature dimension of video data, or the like.

In a possible implementation, the predicting second information of the plurality of pieces of data based on the first information and by using the first neural network in the generative flow model includes: obtaining, based on the first information and by using the first neural network in the generative flow model, a probability that causality exists between each of a plurality of variable pairs; and obtaining the second information based on a highest probability that the first causality exists in the variable pair that is in the plurality of variable pairs and that includes the first data and the second data. In other words, the first neural network may select a variable pair from the plurality of variable pairs including the plurality of variables (the plurality of variable pairs do not have causality in the first information), and the selected variable pair may have causality in the second information.

A variable pair with causality may be selected according to a specific constraint rule, to ensure that the selected variable pair (for example, the first variable and the second variable in this embodiment of this application) can enable a graph corresponding to the second information to be a directed acyclic graph. Alternatively, even if the selected variable pair can enable a graph corresponding to the second information to be a directed cyclic graph, the second information is not used. The following describes the two manners.

Manner 1: Based on a target constraint

In a possible implementation, a target constraint may be obtained based on the first information. The target constraint is used to constrain that causality does not exist between a plurality of variable pairs in the second information, each variable indicates a node in a graph, a node corresponding to a variable serving as a dependent variable points to a node corresponding to a variable serving as an outcome variable, and the target constraint is used to constrain the graph corresponding to the second information to be a directed acyclic graph. Correspondingly, the second information of the plurality of variables may be predicted based on the first information and the target constraint and by using the first neural network in the generative flow model.

In other words, selection of the variable pair by the first neural network may be constrained based on the target constraint, so that the causality added to the second information does not cause the graph corresponding to the second information to become a directed cyclic graph.

In a possible implementation, the plurality of variable pairs include a target variable pair, and the target variable pair includes a third variable and a fourth variable. It should be understood that the target variable pair may be any variable pair that is indicated by the target constraint and that does not have causality in the second information.

In a possible implementation, when the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable. It should be understood that the first information may indicate direct causality between the third variable and the fourth variable, or may indicate indirect causality between the third variable and the fourth variable.

In other words, when causality in the second information is opposite to that in the first information, the second information is not a cyclic graph.

In a possible implementation, it may be determined, based on that the second information indicates that causality exists between any variable and at least one variable in the plurality of variables, that a current round of iteration ends (that is, the second information is a termination node).

In a possible implementation, it may be determined, based on an adjacency matrix that is obtained through calculation and that is of a transitive closure, whether the termination node is reached. For example, when the adjacency matrix of the transitive closure can help identify a unique topology sequence, the termination node is reached.

In this embodiment of this application, a loss function (a difference is minimized) may be constructed based on a difference (the difference is minimized) between an input flow and an output flow of each intermediate status (for example, the first information) and a difference (the difference is minimized) between an input flow and a reward of the termination node (for example, the second information). The generative flow model may be updated according to the loss function, so that the generative flow model can gradually have a capability of finding more accurate causality between a plurality of variables.

Specifically, in a possible implementation, the generative flow model may use the causality between the plurality of variables as statuses of nodes; sequentially transfer the statuses; when the termination node is reached, obtain the input flow and the output flow of the intermediate node and the input flow and the reward of the termination node based on the status of each node; and further construct a loss function based on the input flow and the output flow of the intermediate node and the input flow and the reward of the termination node, to update the generative flow model.

The updated generative flow model may repeatedly use the causality between the plurality of variables as the statuses of the nodes, and sequentially transfer the statuses, to construct the loss function, and update the generative flow model for a plurality of times until the generative flow model converges. The converged generative flow model may use the causality between the plurality of variables as the statuses of the nodes, and sequentially transfer the statuses. Causality indicated by the termination node may be used as the causality between the plurality of variables and output.

In a possible implementation, a first input flow of the first information may be obtained based on the first information and by using a second neural network in the generative flow model (for example, the first information (for example, the embedding representation of the first information) may be input to the second neural network; or a parent node (for example, an embedding representation of the parent node) related to the first information is input to the second neural network). A first output flow of the first information is obtained based on the first information and by using a third neural network in the generative flow model. A degree of difference between the first input flow and the first output flow is used to obtain a loss function. The first neural network, the second neural network, and the third neural network are updated according to the loss function.

In a possible implementation, a plurality of pieces of third information (namely, the parent node of the first information) may be obtained based on the first information. The first information indicates that causality exists between M variable pairs in the plurality of variables, each piece of third information indicates that causality exists between variables in some of the M variable pairs, and M is a positive integer greater than 1. Each piece of third information may be used as the parent node of the first information. A first input flow of the plurality of pieces of third information may be obtained based on the plurality of pieces of third information and by using the second neural network in the generative flow model. An embedding representation of each piece of third information may be obtained based on the plurality of pieces of third information, and the embedding representation of each piece of third information is input to the second neural network, to obtain an input flow of each piece of third information. A sum of input flows of the plurality of pieces of third information may be the first input flow of the plurality of pieces of third information, and the first input flow may be understood as a flow input to the first information.

In a possible implementation, the first output flow of the first information may be obtained based on the first information and by using the third neural network in the generative flow model. The embedding representation of the first information may be obtained based on the first information, and the embedding representation of the first information is input to the third neural network, to obtain the output flow of the first information.

In a possible implementation, the degree of difference (for example, the difference is minimized) between the first input flow and the first output flow is used to construct a loss function, and the first neural network, the second neural network, and the third neural network may further be updated according to the loss function.

When the second information is the termination node (for determining logic of the termination node, refer to the descriptions in the foregoing embodiment, and details are not described herein again), the input flow and the reward of the second information may be calculated, and the loss function is constructed based on a degree of difference between the input flow and the reward.

In a possible implementation, a second input flow of the second information may be obtained based on the second information and by using the second neural network in the generative flow model, and a first reward of the second information is obtained based on the second information and by using the third neural network in the generative flow model. A degree of difference between the second input flow and the first reward is used to construct a loss function. The first neural network, the second neural network, and the third neural network are updated according to the loss function.

In a possible implementation, a plurality of pieces of fourth information may be obtained based on the first information. The second information indicates that causality exists between variables in N variable pairs, each piece of fourth information indicates that causality exists between variables in some of the N variable pairs, and N is a positive integer greater than 1. A second input flow of the plurality of pieces of fourth information is obtained based on the plurality of pieces of fourth information and by using the second neural network in the generative flow model. For calculation of the input flow of the second information, refer to the calculation of the input flow of the first information in the foregoing descriptions. Details are not described herein again.

In a possible implementation, the first reward of the second information may be obtained based on the second information. The first reward indicates a coincidence degree of joint distribution of the second information and a dataset of the plurality of variables, and the degree of difference between the second input flow and the first reward is used to construct a loss function. The first neural network, the second neural network, and the third neural network are updated according to the loss function.

In a possible implementation, when the first neural network predicts the second information based on the first information, the target constraint that can ensure that the second information is a directed acyclic graph may not be used. Therefore, the second information may become a directed cyclic graph or another graph that does not meet a requirement.

In a possible implementation, when predicting the second information based on the first information, the first neural network may predict a data pair with causality from variable pairs without causality that are indicated by the first information, to obtain the second information. If the second information is a directed acyclic graph and does not meet a termination node condition based on the target constraint, the first neural network may continue to predict causality between the plurality of variables based on the second information.

If the second information is a directed cyclic graph or another graph that does not meet a requirement, it may be considered that the second information is a termination node. A current iteration ends, and the generative flow model is updated according to the constructed loss function.

For the intermediate node, an example in which the first information is the intermediate node is used. In a possible implementation, the plurality of pieces of third information may be obtained based on the first information. The first information indicates that causality exists between the M variable pairs in the plurality of variables, each piece of third information indicates that causality exists between variables in some of the M variable pairs, and M is a positive integer greater than 1. The first input flow of the plurality of pieces of third information is obtained based on the plurality of pieces of third information and by using the second neural network in the generative flow model. A second reward of the first information is obtained based on the first information, where the second reward indicates a coincidence degree of joint distribution of the first information and a dataset of the plurality of variables. The first output flow of the first information is obtained based on the first information and by using the third neural network in the generative flow model. The first input flow and a summation result of the first output flow and the second reward are used to construct a loss function, and the first neural network, the second neural network, and the third neural network may further be updated according to the loss function.

For the termination node, an example in which the second information is the termination node is used. In a possible implementation, the plurality of pieces of fourth information may be obtained based on the second information. The third information indicates that causality exists between the N variable pairs in the plurality of variables, each piece of fourth information indicates that causality exists between variables in some of the N variable pairs, and N is a positive integer greater than 1. The second input flow of the plurality of pieces of fourth information is obtained based on the plurality of pieces of fourth information and by using the second neural network in the generative flow model. The first reward of the second information is obtained based on the second information, where the first reward indicates the coincidence degree of joint distribution of the second information and the dataset of the plurality of variables. The degree of difference between the second input flow and the first reward is used to construct a loss function, and the first neural network, the second neural network, and the third neural network are updated according to the loss function.

According to a second aspect, this application provides a causality determining method. The method includes: obtaining first information of a plurality of variables, where the first information indicates causality between the plurality of variables, the variable includes an operation type of a user and at least one target variable, and the target variable is at least one of the following:

attribute information of an item and attribute information of the user; and
predicting second information of the plurality of variables based on the first information and by using a first neural network in a generative flow model, where
the second information indicates that first causality exists between a first variable and a second variable in the plurality of variables, the first information indicates that the first causality does not exist between the first variable and the second variable, and the first variable is different from the second variable.

In a possible implementation, the attribute information of the user includes at least one of the following: a gender, an age, an occupation, an income, a hobby, and an educational level.

In a possible implementation, the attribute information of the item includes at least one of the following: a name of the item, a developer, an installation package size, a category, and a positive rating.

The attribute information of the user may be an attribute related to a preference feature of the user, for example, at least one of a gender, an age, an occupation, an income, a hobby, and an educational level. The gender may be a male or a female, the age may be a number ranging from 0 to 100, the occupation may be a teacher, a programmer, a chef, and the like, the hobby may be basketball, tennis, running, and the like, and the educational level may be a primary school, a middle school, a high school, a university, or the like. A specific type of the attribute information of the user is not limited in this application.

The item may be a physical item or a virtual item, for example, may be an APP, an audio/video, a web page, and news. The attribute information of the item may be at least one of a name of the item, a developer, an installation package size, a category, and a positive rating. For example, the item is an application program. The category of the item may be a chat type, a parkour game, an office type, or the like. The positive rating may be a score, a comment, or the like on the item. A specific type of the attribute information of the item is not limited in this application.

The operation type may be a behavior operation type of the user for an item. On a network platform and an application, the user usually interacts with the item in various forms (that is, there are a plurality of operation types), for example, operation types such as browsing, clicking, adding to a shopping cart, and purchasing of behavior of the user in an e-commerce platform.

It should be understood that the causality between the plurality of variables that is finally obtained by using the generative flow model may include causality between at least one target variable and the operation type of the user.

For other descriptions of the second aspect, refer to the causality determining method described in the first aspect. Details are not described herein again.

According to a third aspect, this application provides a causality determining method. The method includes:

obtaining first information of a plurality of variables, where the first information indicates causality between the plurality of variables, and the variable includes attribute information of a target object, where
the target object is a chip, and the attribute information is a partial segment or fault information of the chip; or
the target object is a node in a communication network, and a target variable is a key performance indicator KPI, running data, or alarm information of a network element; and
predicting second information of the plurality of variables based on the first information and by using a first neural network in a generative flow model, where
the second information indicates that first causality exists between a first variable and a second variable in the plurality of variables, the first information indicates that the first causality does not exist between the first variable and the second variable, and the first variable is different from the second variable.

The partial segment of the chip may be a partial region on a surface of the chip, a plurality of partial segments may be a plurality of partial regions on the surface of the chip, and areas and shapes of outer contours of any two partial segments in the plurality of partial segments are the same. The same areas of the partial segments may be understood as that areas of regions in which the partial segments are located are the same, and the same shapes of the outer contours of the partial segments may be understood as that outer contours of the regions in which the partial segments are located have a same shape, for example, a square or a rectangle with a same length-to-width ratio. In a possible implementation, an area of each of the plurality of partial segments is within a preset range, and the area of each partial segment cannot be too large or too small. The area of the partial segment may be related to a size of the chip, and a larger size of the chip indicates a larger area of the partial segment. For example, the area of the partial segment may be proportional to an area of the chip. Alternatively, the area of the partial segment may be related to a length of an interval between basic units of the chip. For example, a side length of the partial segment may be set to a preset multiple, for example, three times, four times, or five times, of the length of the interval between the basic units (for example, a copper-plated polygon region of the chip). Each partial segment may include arranged components and/or a connection line between components. In this embodiment of this application, the partial segment may specifically be obtained image information of each partial fragment or other obtained information that can express component arrangement or a connection line structure on the partial segment, and a structure feature of the partial segment may be uniquely determined based on the information.

The fault information of the chip may include a quantity of times that each partial segment appears in a diagnosis report, a probability that each partial segment causes a chip fault in a faulty chip, or the like.

The KPI may be used to measure a running status of the network element in the communication network. Usually, an anomaly detection device collects observation data of each KPI at different moments.

For other descriptions of the third aspect, refer to the causality determining method described in the first aspect. Details are not described herein again.

According to a fourth aspect, this application provides a causality determining apparatus. The apparatus includes:

> an obtaining module, configured to obtain first information of a plurality of variables, where the first information indicates causality between the plurality of variables; and
> a causal prediction module, configured to predict second information of the plurality of variables based on the first information and by using a first neural network in a generative flow model.

The second information indicates that first causality exists between a first variable and a second variable in the plurality of variables, the first information indicates that the first causality does not exist between the first variable and the second variable, and the first variable is different from the second variable.

In a possible implementation, the first information indicates that causality exists between X variable pairs in the plurality of variables, and the second information indicates that causality exists between X+1 variable pairs. The X+1 variable pairs include the X variable pairs and a variable pair including the first variable and the second variable.

In a possible implementation, each variable is one of the following:
a feature dimension of image data, a feature dimension of text data, a feature dimension of audio data, and a feature dimension of video data.

In a possible implementation, the apparatus further includes:

> a model update module, configured to: obtain a first input flow of the first information based on the first information and by using a second neural network in the generative flow model;
> obtain a first output flow of the first information based on the first information and by using a third neural network in the generative flow model, where a degree of difference between the first input flow and the first output flow is used to obtain a loss function; and
> update the first neural network, the second neural network, and the third neural network according to the loss function.

In a possible implementation, the model update module is specifically configured to:

> obtain a plurality of pieces of third information based on the first information, where the first information indicates that causality exists between variables in M variable pairs, each piece of third information indicates that causality exists between variables in some of the M variable pairs, and M is a positive integer greater than 1; and
> obtain the first input flow of the first information based on the plurality of pieces of third information and by using the second neural network in the generative flow model.

In a possible implementation, the some variable pairs are M-1 variable pairs in the M variable pairs.

In a possible implementation, the apparatus further includes:
the model update module, configured to obtain a second reward of the first information based on the first information, where the second reward indicates a coincidence degree of joint distribution of the first information and a dataset of the plurality of variables.

That a degree of difference between the first input flow and the first output flow is used to construct a loss function includes:

the first input flow and a summation result of the first output flow and the second reward are used to construct the loss function.

In a possible implementation, the apparatus further includes:

the model update module, configured to: obtain a second input flow of the second information by using the second neural network in the generative flow model;

obtain a first reward of the second information based on the second information and by using the third neural network in the generative flow model, where a degree of difference between the second input flow and the first reward is used to construct a loss function; and

update the first neural network, the second neural network, and the third neural network according to the loss function.

In a possible implementation, the obtaining a second input flow of the second information based on the second information and by using the second neural network in the generative flow model includes:

obtaining a plurality of pieces of fourth information based on the first information, where the second information indicates that causality exists between variables in N variable pairs, each piece of fourth information indicates that causality exists between variables in some of the N variable pairs, and N is a positive integer greater than 1; and

obtaining the second input flow of the second information based on the plurality of pieces of fourth information and by using the second neural network in the generative flow model.

In a possible implementation, the model update module is further configured to:

trigger, based on that the second information indicates that causality exists between any variable and at least one variable in the plurality of variables, execution of the step of obtaining the first reward of the second information based on the second information.

In a possible implementation, the second information corresponds to a first graph, each variable corresponds to a node in the first graph, a node corresponding to a variable serving as a dependent variable in the second information points to a node corresponding to a variable serving as an outcome variable, and the model update module is further configured to:

trigger, based on the first graph being a directed cyclic graph, execution of the step of obtaining the first reward of the second information based on the second information.

In a possible implementation, the apparatus further includes:

a constraint obtaining module, configured to obtain a target constraint based on the first information, where the target constraint is used to constrain that causality does not exist between a plurality of variable pairs in the second information.

The predicting second information of the plurality of variables based on the first information and by using a first neural network in a generative flow model includes:

predicting the second information of the plurality of variables based on the first information and the target constraint and by using the first neural network in the generative flow model.

In a possible implementation, the second information corresponds to the first graph, each variable corresponds to the node in the first graph, the node corresponding to the variable serving as the dependent variable in the second information points to the node corresponding to the variable serving as the outcome variable, and the target constraint is used to constrain the first graph to be a directed acyclic graph.

In a possible implementation, the plurality of variable pairs include a target variable pair, and the target variable pair includes a third variable and a fourth variable.

When the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable; or

when the third variable is the same as the fourth variable, the target constraint constrains the second information to indicate that causality does not exist between the third variable and the fourth variable.

In a possible implementation, the causal prediction module is specifically configured to:

obtain, based on the first information and by using the first neural network in the generative flow model, a probability that causality exists between each of a plurality of variable pairs; and

obtain the second information based on a highest probability that the first causality exists in a variable pair that is in the plurality of variable pairs and that includes the first variable and the second variable.

According to a fifth aspect, this application provides a causality determining apparatus. The apparatus includes:

an obtaining module, configured to obtain first information of a plurality of variables, where the first information indicates causality between the plurality of variables, the variable includes an operation type of a user and at least one target variable, and the target variable is at least one of the following:

attribute information of an item and attribute information of the user; and
a causal prediction module, configured to predict second information of the plurality of variables based on the first information and by using a first neural network in a generative flow model.

The second information indicates that first causality exists between a first variable and a second variable in the plurality of variables, the first information indicates that the first causality does not exist between the first variable and the second variable, and the first variable is different from the second variable.

In a possible implementation, the attribute information of the user includes at least one of the following: a gender, an age, an occupation, an income, a hobby, and an educational level.

In a possible implementation, the attribute information of the item includes at least one of the following: a name of the item, a developer, an installation package size, a category, and a positive rating.

In a possible implementation, the first information indicates that causality exists between X variable pairs in the plurality of variables, and the second information indicates that causality exists between X+1 variable pairs. The X+1 variable pairs include the X variable pairs and a variable pair including the first variable and the second variable.

In a possible implementation, each variable is one of the following:
a feature dimension of image data, a feature dimension of text data, a feature dimension of audio data, and a feature dimension of video data.

In a possible implementation, the apparatus further includes:

a model update module, configured to: obtain a first input flow of the first information based on the first information and by using a second neural network in the generative flow model;
obtain a first output flow of the first information based on the first information and by using a third neural network in the generative flow model, where a degree of difference between the first input flow and the first output flow is used to obtain a loss function; and
update the first neural network, the second neural network, and the third neural network according to the loss function.

In a possible implementation, the model update module is specifically configured to:

obtain a plurality of pieces of third information based on the first information, where the first information indicates that causality exists between variables in M variable pairs, each piece of third information indicates that causality exists between variables in some of the M variable pairs, and M is a positive integer greater than 1; and
obtain the first input flow of the first information based on the plurality of pieces of third information and by using the second neural network in the generative flow model.

In a possible implementation, the some variable pairs are M-1 variable pairs in the M variable pairs.

In a possible implementation, the apparatus further includes:
the model update module, configured to obtain a second reward of the first information based on the first information, where the second reward indicates a coincidence degree of joint distribution of the first information and a dataset of the plurality of variables.

That a degree of difference between the first input flow and the first output flow is used to construct a loss function includes:
the first input flow and a summation result of the first output flow and the second reward are used to construct the loss function.

In a possible implementation, the apparatus further includes:

the model update module, configured to: obtain a second input flow of the second information by using the second neural network in the generative flow model;
obtain a first reward of the second information based on the second information and by using the third neural network in the generative flow model, where a degree of difference between the second input flow and the first reward is used to construct a loss function; and
update the first neural network, the second neural network, and the third neural network according to the loss function.

In a possible implementation, the obtaining a second input flow of the second information based on the second information and by using the second neural network in the generative flow model includes:

obtaining a plurality of pieces of fourth information based on the first information, where the second information indicates that causality exists between variables in N variable pairs, each piece of fourth information indicates that causality exists between variables in some of the N variable pairs, and N is a positive integer greater than 1; and

obtaining the second input flow of the second information based on the plurality of pieces of fourth information and by using the second neural network in the generative flow model.

In a possible implementation, the model update module is further configured to:
trigger, based on that the second information indicates that causality exists between any variable and at least one variable in the plurality of variables, execution of the step of obtaining the first reward of the second information based on the second information.

In a possible implementation, the second information corresponds to a first graph, each variable corresponds to a node in the first graph, a node corresponding to a variable serving as a dependent variable in the second information points to a node corresponding to a variable serving as an outcome variable, and the model update module is further configured to:
trigger, based on the first graph being a directed cyclic graph, execution of the step of obtaining the first reward of the second information based on the second information.

In a possible implementation, the apparatus further includes:
a constraint obtaining module, configured to obtain a target constraint based on the first information, where the target constraint is used to constrain that causality does not exist between a plurality of variable pairs in the second information.

The predicting second information of the plurality of variables based on the first information and by using a first neural network in a generative flow model includes:
predicting the second information of the plurality of variables based on the first information and the target constraint and by using the first neural network in the generative flow model.

In a possible implementation, the second information corresponds to the first graph, each variable corresponds to the node in the first graph, the node corresponding to the variable serving as the dependent variable in the second information points to the node corresponding to the variable serving as the outcome variable, and the target constraint is used to constrain the first graph to be a directed acyclic graph.

In a possible implementation, the plurality of variable pairs include a target variable pair, and the target variable pair includes a third variable and a fourth variable.

When the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable; or
when the third variable is the same as the fourth variable, the target constraint constrains the second information to indicate that causality does not exist between the third variable and the fourth variable.

In a possible implementation, the causal prediction module is specifically configured to:

obtain, based on the first information and by using the first neural network in the generative flow model, a probability that causality exists between each of a plurality of variable pairs; and

obtain the second information based on a highest probability that the first causality exists in a variable pair that is in the plurality of variable pairs and that includes the first variable and the second variable.

According to a sixth aspect, this application provides a causality determining apparatus. The apparatus includes:

an obtaining module, configured to obtain first information of a plurality of variables, where the first information indicates causality between the plurality of variables, and the variable includes attribute information of a target object, where
the target object is a chip, and the attribute information is a partial segment or fault information of the chip; or
the target object is a node in a communication network, and a target variable is a key performance indicator KPI, running data, or alarm information of a network element; and
a causal prediction module, configured to predict second information of the plurality of variables based on the first information and by using a first neural network in a generative flow model.

The second information indicates that first causality exists between a first variable and a second variable in the plurality of variables, the first information indicates that the first causality does not exist between the first variable and the second variable, and the first variable is different from the second variable.

In a possible implementation, the first information indicates that causality exists between X variable pairs in the plurality of variables, and the second information indicates that causality exists between X+1 variable pairs. The X+1 variable pairs include the X variable pairs and a variable pair including the first variable and the second variable.

In a possible implementation, each variable is one of the following:

a feature dimension of image data, a feature dimension of text data, a feature dimension of audio data, and a feature dimension of video data.

In a possible implementation, the apparatus further includes:

a model update module, configured to: obtain a first input flow of the first information based on the first information and by using a second neural network in the generative flow model;

obtain a first output flow of the first information based on the first information and by using a third neural network in the generative flow model, where a degree of difference between the first input flow and the first output flow is used to obtain a loss function; and

update the first neural network, the second neural network, and the third neural network according to the loss function.

In a possible implementation, the model update module is specifically configured to:

obtain a plurality of pieces of third information based on the first information, where the first information indicates that causality exists between variables in M variable pairs, each piece of third information indicates that causality exists between variables in some of the M variable pairs, and M is a positive integer greater than 1; and

obtain the first input flow of the first information based on the plurality of pieces of third information and by using the second neural network in the generative flow model.

In a possible implementation, the some variable pairs are M-1 variable pairs in the M variable pairs.

In a possible implementation, the apparatus further includes:

the model update module, configured to obtain a second reward of the first information based on the first information, where the second reward indicates a coincidence degree of joint distribution of the first information and a dataset of the plurality of variables.

That a degree of difference between the first input flow and the first output flow is used to construct a loss function includes:

the first input flow and a summation result of the first output flow and the second reward are used to construct the loss function.

In a possible implementation, the apparatus further includes:

the model update module, configured to: obtain a second input flow of the second information by using the second neural network in the generative flow model;

obtain a first reward of the second information based on the second information and by using the third neural network in the generative flow model, where a degree of difference between the second input flow and the first reward is used to construct a loss function; and

update the first neural network, the second neural network, and the third neural network according to the loss function.

In a possible implementation, the obtaining a second input flow of the second information based on the second information and by using the second neural network in the generative flow model includes:

obtaining a plurality of pieces of fourth information based on the first information, where the second information indicates that causality exists between variables in N variable pairs, each piece of fourth information indicates that causality exists between variables in some of the N variable pairs, and N is a positive integer greater than 1; and

obtaining the second input flow of the second information based on the plurality of pieces of fourth information and by using the second neural network in the generative flow model.

In a possible implementation, the model update module is further configured to:

trigger, based on that the second information indicates that causality exists between any variable and at least one variable in the plurality of variables, execution of the step of obtaining the first reward of the second information based on the second information.

In a possible implementation, the second information corresponds to a first graph, each variable corresponds to a node in the first graph, a node corresponding to a variable serving as a dependent variable in the second information points to a node corresponding to a variable serving as an outcome variable, and the model update module is further configured to:

trigger, based on the first graph being a directed cyclic graph, execution of the step of obtaining the first reward of the second information based on the second information.

In a possible implementation, the apparatus further includes:

a constraint obtaining module, configured to obtain a target constraint based on the first information, where the target constraint is used to constrain that causality does not exist between a plurality of variable pairs in the second information.

The predicting second information of the plurality of variables based on the first information and by using a first neural network in a generative flow model includes:

predicting the second information of the plurality of variables based on the first information and the target constraint and by using the first neural network in the generative flow model.

In a possible implementation, the second information corresponds to the first graph, each variable corresponds to the node in the first graph, the node corresponding to the variable serving as the dependent variable in the second information points to the node corresponding to the variable serving as the outcome variable, and the target constraint is used to constrain the first graph to be a directed acyclic graph.

In a possible implementation, the plurality of variable pairs include a target variable pair, and the target variable pair includes a third variable and a fourth variable.

When the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable; or

when the third variable is the same as the fourth variable, the target constraint constrains the second information to indicate that causality does not exist between the third variable and the fourth variable.

In a possible implementation, the causal prediction module is specifically configured to:

obtain, based on the first information and by using the first neural network in the generative flow model, a probability that causality exists between each of a plurality of variable pairs; and

obtain the second information based on a highest probability that the first causality exists in a variable pair that is in the plurality of variable pairs and that includes the first variable and the second variable.

According to a seventh aspect, an embodiment of this application provides a causality determining apparatus. The apparatus may include a memory, a processor, and a bus system. The memory is configured to store a program, and the processor is configured to execute the program in the memory, to perform the method in any one of the first aspect and the optional implementations of the first aspect, the method in any one of the second aspect and the optional implementations of the second aspect, or the method in any one of the third aspect and the optional implementations of the third aspect.

According to an eighth aspect, an embodiment of this application provides a computer-readable storage medium. The computer-readable storage medium stores a computer program, when the computer program is run on a computer, the computer is enabled to perform the method in any one of the first aspect and the optional implementations of the first aspect, the method in any one of the second aspect and the optional implementations of the second aspect, or the method in any one of the third aspect and the optional implementations of the third aspect.

According to a ninth aspect, an embodiment of this application provides a computer program product including instructions. When the instructions are run on a computer, the computer is enabled to perform the method in any one of the first aspect and the optional implementations of the first aspect, the method in any one of the second aspect and the optional implementations of the second aspect, or the method in any one of the third aspect and the optional implementations of the third aspect.

According to a tenth aspect, this application provides a chip system. The chip system includes a processor, configured to support a causality determining apparatus to implement some or all functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete component.

**BRIEF DESCRIPTION OF DRAWINGS**

FIG. 1 is a schematic diagram of an application architecture;
FIG. 2 is a schematic diagram of an application architecture;
FIG. 3 is a schematic diagram of an application architecture;
FIG. 4 is a schematic diagram of an application architecture;
FIG. 5 is a schematic diagram of an application architecture;
FIG. 6 is a schematic diagram of a generation process of a generative flow model according to an embodiment of this application;

FIG. 7 is a schematic diagram of an embodiment of a causality determining method according to an embodiment of this application;

FIG. 8 is a schematic diagram of an embodiment of causality sequence generation according to an embodiment of this application;

FIG. 9 is a schematic diagram of determining a target constraint according to an embodiment of this application;

FIG. 10 is a schematic diagram of a closure matrix according to an embodiment of this application;

FIG. 11 is a schematic diagram of a transpose of a closure matrix according to an embodiment of this application;

FIG. 12 is a schematic diagram of determining a target constraint according to an embodiment of this application;

FIG. 13 is a schematic diagram of solving of a parent node according to an embodiment of this application;

FIG. 14 is a schematic diagram of a causality determining procedure according to an embodiment of this application;

FIG. 15 is a schematic diagram of an embodiment of causality sequence generation according to an embodiment of this application;

FIG. 16 is a schematic diagram of a causality determining procedure according to an embodiment of this application;

FIG. 17 is a schematic diagram of an embodiment of a causality determining apparatus according to an embodiment of this application;

FIG. 18 is a schematic diagram of a structure of an execution device according to an embodiment of this application;

FIG. 19 is a schematic diagram of a structure of a server according to an embodiment of this application; and

FIG. 20 is a schematic diagram of a structure of a chip according to an embodiment of this application.

## DESCRIPTION OF EMBODIMENTS

The following describes embodiments of the present invention with reference to the accompanying drawings in embodiments of the present invention. Terms used in implementations of the present invention are merely used to explain specific embodiments of the present invention, but are not intended to limit the present invention.

The following describes embodiments of this application with reference to accompanying drawings. A person of ordinary skill in the art may know that, with development of technologies and emergence of a new scenario, technical solutions provided in embodiments of this application are also applicable to similar technical problems.

In the specification, claims, and the accompanying drawings of this application, terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, product, or device.

"Substantially (substantially)", "about (about)", and similar terms used in the specification indicate approximation rather than a degree, and are intended to consider inherent deviations of measured values or calculated values that are to be known to a person of ordinary skill in the art. In addition, when embodiments of the present invention are described, "may (may)" means "one or more possible embodiments". The terms "use (use)", "using (using)", and "used (used)" used in the specification may be considered to be respectively synonymous with the terms "utilize (utilize)", "utilizing (utilizing)", and "utilized (utilized)". In addition, the term "example (exemplary)" is intended to indicate an instance or an example.

An application scenario of this application is first described. This application may be used in, but is not limited to, a scenario, for example, image processing, audio processing, text processing, or video processing, in which causality needs to be identified. The following separately describes the scenarios.

In a possible implementation, causality identification may be used for fault identification in various scenarios, for example, may be used to identify a fault in a communication network, identify a system disadvantage of a chip, identify a faulty node of a computer transaction, and identify a mechanical fault. The following separately describes the scenarios.

In a possible implementation, causality identification may be used to identify a fault in the communication network.

A (key performance indicator, KPI) of the communication network may be used to measure a running status of a network element in the communication network. Usually, an anomaly detection device collects observation data of each KPI at different moments. If the observation data of the KPI is abnormal, it indicates that the running status of the network element in the communication network is abnormal. A network operation and maintenance engineer needs to search for a cause based on the abnormal KPI, to rectify the fault.

In a possible implementation, causality between some abnormal KPIs may be determined according to a causality determining method. For example, a root cause why a first KPI is abnormal is that a second KPI is abnormal. Therefore, the network operation and maintenance engineer may determine a faulty network element based on the second KPI, to rectify the fault.

In a possible implementation, the KPI is equivalent to a variable in embodiments of this application, the observation data of the KPI at different moments is equivalent to data of the variable in embodiments of this application, and causality between KPIs may be obtained according to the causality determining method in embodiments of this application.

In a possible implementation, causality identification may be used to identify a system disadvantage of the chip.

With development of functions of electronic products and expansion of application fields, the chip, as a core component of the electronic product, becomes an indispensable part of people's life. Production of the chip is mainly divided into two parts: a layout design and manufacturing. The layout design usually includes a multi-layer circuit function design. The manufacturing includes procedures such as production, packaging, and testing. When different manufacturing processes are used for a same chip design, in some chip designs, disadvantages may occur in a circuit structure that is normal under an original process. Consequently, a chip yield rate is lower than expected. The circuit structure that has design disadvantages due to a process change is referred to as a system disadvantage.

The system disadvantage may increase a probability of a circuit function failure of the chip. The chip with a circuit function failure cannot be used normally, and consequently, the yield rate of the chip decreases. The decrease in the yield rate may increase production costs and even lead to missing of a sales window period. Therefore, root cause identification for a system disadvantage is critical to a product yield rate. To identify the system disadvantage, a design structure of the chip may be analyzed to determine a type of a partial segment that causes a potential fault of the chip.

In a possible implementation, the type of the partial segment that causes the potential fault of the chip may be obtained based on an image of each segment on the chip and by using the causality determining method.

In a possible implementation, causality identification may be used to identify a faulty node of a computer transaction.

With development of computer technologies, transactions that can be processed by a computer device increase rapidly. In addition, the computer device may execute a same transaction for a plurality of times every day, to meet requirements of a large quantity of users. A transaction problem needs to be analyzed, to improve transaction execution performance, and better execute a transaction.

Currently, a transaction analysis process is generally as follows: In a transaction execution process, a current execution record is collected in real time, and information about each node invoked for executing a transaction is extracted from the execution record. The information about the node includes a name of the node, duration of invoking the node, status code, an invoking relationship between different nodes, and the like. Then, the information about each node is displayed on an interface. Whether the nodes are faulty may be determined based on the information about each node and by using the causal identification method, to finally find a node that causes a transaction problem.

In a possible implementation, causality identification may be used to identify a mechanical fault.

For a mechanical processing system, if causality between each attribute and a product is determined, an attribute with largest impact on an unqualified product can be preferentially adjusted based on the found causality.

In a possible implementation, for a power transmission system, if an intermediate voltage at each transmission device, a working status of the transmission system, and causality between a current and a power loss are determined, a variable with largest impact on the power loss may be preferentially adjusted based on the found causality. In this way, performance of the power transmission system can be improved.

In a possible implementation, the causality determining method may be used to perform causal identification related to operation behavior of a user in a recommendation field.

In a possible implementation, an operation log of the user may be obtained. The operation log may include operation behavior of the user on an item, attribute information of the item, and attribute information of the user. Causality between each piece of attribute information and the operation behavior of the user may be determined through causality identification.

In terms of a product implementation form, embodiments of this application may be used in a causality identification application program (or another type of computer program product), a cloud service, provided by a cloud server, related to causality identification, and the like.

The following separately describes causality identification application programs in embodiments of this application from a perspective of a functional architecture and a product architecture for implementing a function.

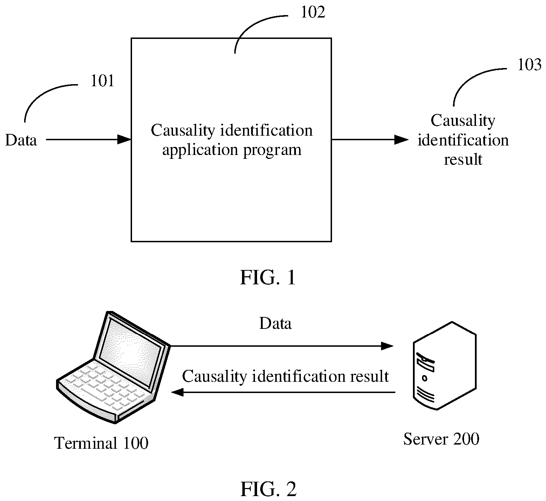

FIG. 1 is a schematic diagram of a functional architecture of a causality identification application program according to an embodiment of this application.

In a possible implementation, embodiments of this application include a system (for example, the causality identification application program) that can automatically identify causality between variables of data based on the input data. As shown in FIG. 1, a causality identification application program 102 may receive input data 101 (optionally, a variable of the data may also be included, or a variable of the data may be automatically identified) and output a causality identification result 103 between variables. The causality identification application program 102 may be executed (for example) on at least one computer system, and includes computer code. When the computer code is executed by one or more computers, the computer is enabled to perform the causality determining method described in the specification.

In a possible implementation, the causality identification application program may be run on a terminal device on a terminal side or on a server on a cloud side.

For example, the causality identification application program may be installed on the terminal device, and actions including data input, data processing (for example, the causality determining method in embodiments of this application), and data output may be performed by the terminal device.

For example, a client of the causality identification application program may be installed on the terminal device, and the actions including data input and data output may be performed by the terminal device. The action of data processing (for example, the causality determining method in embodiments of this application) may be performed by the server on the cloud side. In other words, the terminal device may transmit data required for data processing (for example, the causality determining method in embodiments of this application) to the server on the cloud side. After completing the action of data processing, the server on the cloud side may return a data processing result to the terminal device on the terminal side. The terminal device outputs causality based on the processing result.

The following describes an entity architecture that runs the causality identification application programs in embodiments of this application.

FIG. 2 is a schematic diagram of an entity architecture that runs a causality identification application program according to an embodiment of this application.

FIG. 2 is a schematic diagram of a system architecture. The system may include a terminal 100 and a server 200. The server 200 may include one or more servers (in FIG. 2, an example in which one server is included is used for description), and the server 200 may provide a causality identification program for one or more terminals.

The causality identification application program may be installed on the terminal 100, or a web page related to causality identification is opened. The application program and the web page may provide a causality identification interface. The terminal 100 may receive related data input by a user on the causality identification interface, and send the data to the server 200. The server 200 may obtain a processing result (a causality identification result of the data) based on the received data, and return the processing result to the terminal 100.

It should be understood that, in some optional implementations, the terminal 100 may alternatively complete the action of obtaining the data processing result based on the received data without cooperation of the server. This is not limited in embodiments of this application.

The following describes a product form of the terminal 100 in FIG. 2.

The terminal 100 in embodiments of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), and the like. This is not limited in embodiments of this application.

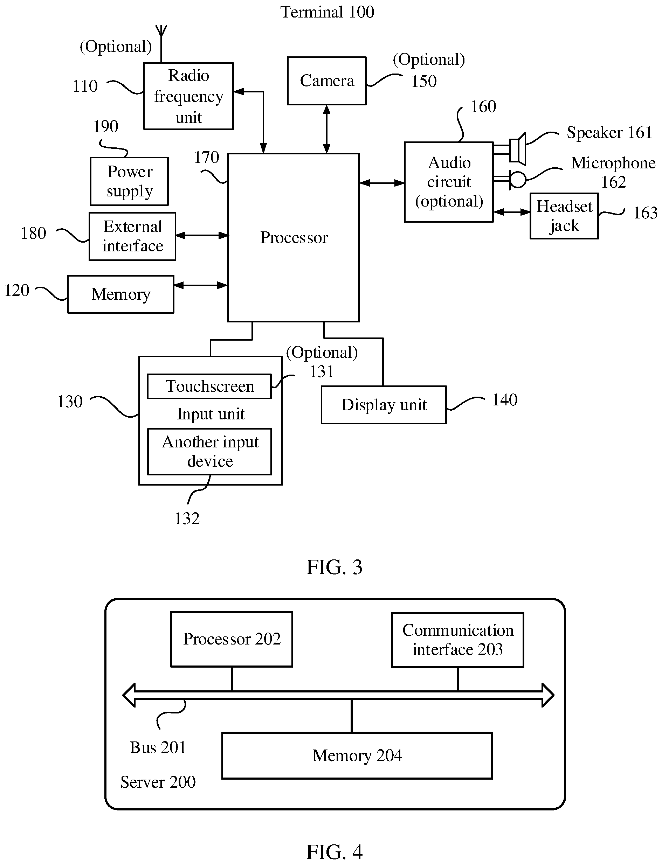

FIG. 3 is a schematic diagram of an optional hardware structure of the terminal 100.

Refer to FIG. 3. The terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 3 is merely an example of a terminal or a multifunctional device and does not constitute a limitation on the terminal or the multifunctional device. The terminal or the multifunctional device may include more or fewer components than those shown in the figure, or combine some components, or have different components.

The input unit 130 may be configured to receive input digit or character information, and generate a key signal input related to user setting and function control of the portable multifunctional device. Specifically, the input unit 130 may include a touchscreen 131 (optional) and/or another input device 132. The touchscreen 131 may collect a touch operation (for example, an operation performed by the user on the touchscreen or near the touchscreen by using any proper object, for example, a finger, a joint, or a stylus) of the user on or near the touchscreen 131, and drive a corresponding connection apparatus based on a preset program. The touchscreen may detect a touch operation of the user on the touchscreen, convert the touch operation to a touch signal and send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be implemented in a plurality of types, such as a resistive type, a capacitive type, an infrared ray type, and a surface acoustic wave type. In addition to the touchscreen 131, the input unit 130 may include the another input device. Specifically, the another input device 132 may include, but is not limited to, one or more of a physical keyboard, a functional key (for example, a volume control key or a power on/off key 133), a trackball, a mouse, a joystick, and the like.

The another input device 132 may receive a parameter related to causality identification, for example, a plurality of pieces of data (optionally, may further include a plurality of variables) in embodiments of this application.

The display unit 140 may be configured to display information input by the user or information provided for the user, various menus of the terminal 100, an interaction interface, file display, and/or playing of any multimedia file. In this embodiment of this application, the display unit 140 may be configured to display an interface, a causality result, and the like of the causality identification application program.

The memory 120 may be configured to store instructions and data. The memory 120 may mainly include an instruction storage region and a data storage region. The data storage region may store various kinds of data such as a multimedia file and a text; and the instruction storage region may store software units such as an operating system, an application, and instructions required by at least one function, or subsets and extended sets thereof. The memory 120 may further include a non-volatile random access memory, and provide hardware, software, a data resource, and the like in a management and calculation processing device for the processor 170, to support control on software and an application. The memory 120 is further configured to store a multimedia file, and store a running program and an application.

The processor 170 is a control center of the terminal 100, connects various parts of the entire terminal 100 through various interfaces and lines, and executes various functions of the terminal 100 and processes data by running or executing the instructions stored in the memory 120 and invoking the data stored in the memory 120, to entirely control the terminal device. Optionally, the processor 170 may include one or more processing units. Preferably, an application processor and a modem processor may be integrated into the processor 170. The application processor mainly processes an operating system, a user interface, an application program, and the like. The modem processor mainly processes wireless communication. It can be understood that the modem processor may not be integrated into the processor 170. In some embodiments, the processor and the memory may be implemented on a single chip. In other embodiments, the processor and the memory may be implemented on separate chips. The processor 170 may further be configured to: generate a corresponding operation control signal, send the operation control signal to a corresponding component in the calculation processing device, and read and process data in software, especially read and process the data and the program in the memory 120, so that functional modules perform corresponding functions, to control a corresponding component to perform an operation as required by an instruction.

The memory 120 may be configured to store software code related to the causality determining method. The processor 170 may perform steps of the causality determining method of the chip, or may schedule another unit (for example, the input unit 130 and the display unit 140) to implement a corresponding function.

The radio frequency unit 110 (optional) may be configured to receive and send a signal in an information receiving and sending process or a call process. For example, after receiving downlink information of a base station, the radio frequency unit 110 sends the downlink information to the processor 170 for processing. In addition, the radio frequency unit 110 sends designed uplink data to the base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to global system for mobile communication (Global System for Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In this embodiment of this application, the radio frequency unit 110 may send data to the server 200, and receive a causality identification result sent by the server 200.

It should be understood that the radio frequency unit 110 is optional, and may be replaced with another communication interface, for example, a network interface.

The terminal 100 further includes the power supply 190 (for example, a battery) for supplying power to the components. Preferably, the power supply may be logically connected to the processor 170 by using a power management system, to implement functions such as charging, discharging, and power consumption management by using the power management system.

The terminal 100 further includes the external interface 180. The external interface may be a standard Micro USB interface, or may be a multi-pin connector, may be configured to connect the terminal 100 to another apparatus for communication, and may also be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of methods described below may be used in the terminal 100 shown in FIG. 3.

The following describes a product form of the server 200 in FIG. 2.

FIG. 4 is a schematic diagram of a structure of the server 200. As shown in FIG. 4, the server 200 includes a bus 201, a processor 202, a communication interface 203, and a memory 204. The processor 202, the memory 204, and the communication interface 203 communicate with each other by using the bus 201.

The bus 201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 4, but this does not mean that there is only one bus or only one type of bus.

The processor 202 may be any one or more of the following processors: a central processing unit (central processing unit, CPU), a graphics processing unit (graphics processing unit, GPU), a microprocessor (microprocessor, MP), a digital signal processor (digital signal processor DSP), or the like.

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to the causality determining method. The processor 202 may perform steps of the causality determining method of the chip, or may schedule another unit to implement a corresponding function.

It should be understood that the terminal 100 and the server 200 may be central or distributed devices. The processors (for example, the processor 170 and the processor 202) in the terminal 100 and the server 200 may be hardware circuits (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of the hardware circuits. For example, the processor may be a hardware system with an instruction execution function, for example, a CPU or a DSP, a hardware system without an instruction execution function, for example, an ASIC or an FPGA, or a combination of the hardware system without an instruction execution function and the hardware system with an instruction execution function.

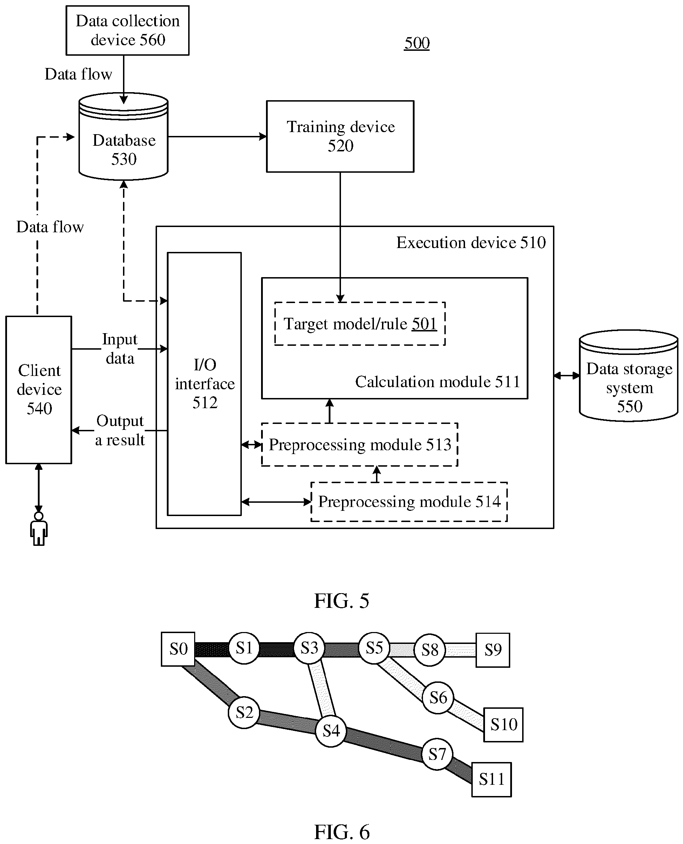

It should be understood that the causality determining method in embodiments of this application relates to an AI-related operation. When the AI operation is performed, an instruction execution architecture of the terminal device and the server is not limited to the architectures of the processor combined with the memory shown in FIG. 3 and FIG. 4. The following describes in detail the system architecture provided in embodiments of this application with reference to FIG. 5.

FIG. 5 is a schematic diagram of a system architecture according to an embodiment of this application. As shown in FIG. 5, a system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The execution device 510 may be the terminal device or the server that runs the causality identification application program.

The data collection device 560 is configured to collect a training sample. The training sample may be information about an I/O unit, information about a bump, a total quantity of connections, and the like. After collecting training samples, the data collection device 560 stores the training samples in the database 530.

The training device 520 may train a to-be-trained neural network (for example, a generative flow model in embodiments of this application) based on the database 530 or the training samples (for example, the plurality of pieces of data and the plurality of variables in embodiments of this application) from the client device 540, to obtain the target model/rule 501 and a causal identification result.

It should be noted that, during actual application, the training samples maintained in the database 530 are not necessarily all collected by the data collection device 560, and may also be received from another device (for example, from the client device 540). In addition, it should be noted that the training device 520 does not necessarily perform training completely based on the training sample maintained in the database 530 to obtain the target model/rule 501, but may obtain a training sample from a cloud or another place to perform model training. The foregoing descriptions shall not constitute any limitation on embodiments of this application.

Optionally, the target model/rule 501 obtained through training by the training device 520 may be used in different systems or devices, for example, used in the execution device 510 shown in FIG. 5. The execution device 510 may be a terminal, for example, a mobile phone terminal, a tablet computer, a notebook computer, an augmented reality (augmented reality, AR)/virtual reality (virtual reality, VR) device, or a vehicle-mounted terminal, may be a server, or the like.

Specifically, the training device 520 may transfer the trained model or the causal identification result to the execution device 510.

In FIG. 5, the execution device 510 configures the input/output (input/output, I/O) interface 512, configured to exchange data with an external device. A user may input data (for example, the plurality of pieces of data or the plurality of variables in embodiments of this application) to the I/O interface 512 by using the client device 540.

The preprocessing module 513 and the preprocessing module 514 are configured to perform preprocessing based on the input data received through the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

When the execution device 510 preprocesses the input data, or when the calculation module 511 in the execution device 510 performs a related processing process like calculation, the execution device 510 may invoke data, code, and the like in the data storage system 550 for corresponding processing, or may store data, instructions, and the like obtained through corresponding processing in the data storage system 550.

Finally, the I/O interface 512 provides a processing result (for example, the causal identification result) for the client device 540, to provide the processing result to the user.

In a case shown in FIG. 5, the user may manually input data, and the user may "manually input the data" on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may specifically be presented in a specific manner, for example, display, sound, or an action. The client device 540 may also be used as a data collection terminal, collect the input data that is input to the I/O interface 512 and that is shown in the figure and the output result output from the I/O interface 512, use the input data and the output result as new sample data, and store the new sample data in the database 530. Alternatively, it is clear that the client device 540 may not perform collection, and the I/O interface 512 directly uses the input data that is input to the I/O interface 512 and that is shown in the figure and the output result output from the I/O interface 512 as new sample data, and stores the new sample data in the database 530.

It should be noted that FIG. 5 is merely a schematic diagram of the system architecture according to an embodiment of this application. A location relationship between a device, a component, a module, and the like shown in the figure constitutes no limitation. For example, in FIG. 5, the data storage system 550 is an external memory relative to the execution device 510. In another case, the data storage system 550 may alternatively be disposed in the execution device 510. It should be understood that the execution device 510 may be deployed in the client device 540.

From a perspective of model training:

in this embodiment of this application, the training device 520 may obtain the code stored in the memory (which is not shown in FIG. 5, and may be integrated into the training device 520 or separately deployed from the training device 520), to implement steps related to model training in embodiments of this application.

In this embodiment of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of the hardware circuits. For example, the training device 520 may be a hardware system with an instruction execution function, for example, a CPU or a DSP, a hardware system without an instruction execution function, for example, an ASIC or an FPGA, or a combination of the hardware system without an instruction execution function and the hardware system with an instruction execution function.

It should be understood that the training device 520 may be the combination of the hardware system with no instruction execution function and the hardware system with the instruction execution function. Some steps related to model training provided in embodiments of this application may alternatively be implemented by the hardware system, in the training device 520, with no instruction execution function. This is not limited herein.

2. Cloud service provided by the server:

In a possible implementation, the server may provide a causality determining service for the terminal side through an application programming interface (application programming interface, API).

The terminal device may send a related parameter (for example, the plurality of pieces of data) to the server through the API provided by the cloud. The server may obtain a processing result based on the received data, and return the processing result (for example, the causal identification result) to the terminal.

For descriptions of the terminal and the server, refer to descriptions in the foregoing embodiments. Details are not described herein again.

Because embodiments of this application relate to massive application of a neural network, for ease of understanding, the following first describes terms and concepts related to the neural network in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f\left(W^T x\right) = f\left(\sum_{s=1}^{n} W_s x_s + b\right)$$

Herein, s=1, 2, ..., or n, n is a natural number greater than 1, Ws is a weight of xs, b is a bias of the neuron, and f is an activation function (activation function) of the neuron, used to introduce a nonlinear feature into the neural network, to convert an input signal in the neuron into an output signal. The output signal of the activation function may be used as an input at a next convolutional layer, and the activation function may be a sigmoid function. The neural network is a network constituted by connecting a plurality of single neurons together. To be specific, an output of a neuron may be an input of another neuron. An input of each neuron may be connected to a local receptive field at a previous layer, to extract a feature of the local receptive field. The local receptive field may be a region including several neurons.

(2) Deep neural network

The deep neural network (Deep Neural Network, DNN), also referred to as a multi-layer neural network, may be understood as a neural network with a plurality of hidden layers. The "plurality" herein does not have a special measurement standard. The DNN is divided based on locations of different layers, so that the neural network in the DNN can be divided into three types: an input layer, hidden layers, and an output layer. Usually, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, the DNN is actually not complex in terms of work at each layer, and is simply represented as the following linear relationship expression: $\vec{y} = \alpha(W\vec{x} + \vec{b})$, where $\vec{x}$ is an input vector, $\vec{y}$ is an output vector, $\vec{b}$ is a bias vector, W is a weight matrix (which is also referred to as a coefficient), and $\alpha()$ is an activation function. At each layer, the output vector $\vec{y}$ is obtained by performing such a simple operation on the input vector $\vec{x}$. Because there are a plurality of layers in the DNN, there are also a plurality of coefficients W and a plurality of bias vectors $\vec{b}$. Definitions of the parameters in the DNN are as follows: The coefficient W is used as an example. It is assumed that in a three-layer DNN, a linear coefficient from a fourth neuron at a second layer to a second neuron at a third layer is defined as $W_{24}^{3}$. The superscript 3 indicates a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at a plurality of layers).

(3) Graph (Graph)

The graph is a data structure that includes at least one vertex and at least one edge. In some scenarios, the vertex in the graph may be mapped to an entity, and the edge in the graph may be mapped to a relationship between entities. The graph may be a directed graph or an undirected graph. It is clear that the graph may further include other data other than the vertex and the edge, for example, a label of the vertex and a label of the edge.

(4) Loss function

In a process of training the deep neural network, because it is expected that an output of the deep neural network is as much as possible close to a predicted value that is actually expected, a predicted value of a current network and a target value that is actually expected may be compared, and then a weight vector at each layer of the neural network is updated based on a difference between the predicted value and the target value (it is clear that there is usually an initialization process before a first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, the difference between the prediction value and the target value" needs to be predefined. This is the loss function (loss function) or an objective function (objective function). The loss function and the objective function are important equations used to measure the difference between the prediction value and the target value. The loss function is used as an example. A higher output value (loss) of the loss function indicates a larger difference. Therefore, training of the deep neural network is a process of minimizing the loss as much as possible.

(5) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, for example, a weight matrix, of an optimal super-resolution model.

(6) Causality

Causality within a variable pair (for example, a variable A and a variable B) may be understood as that the variable A causes the variable B. In other words, the variable A is used as a dependent variable of the variable B, and the variable B is used as an outcome variable of the variable A. Specifically, when other conditions remain unchanged, a change of the variable A causes a change of the variable B.

(7) Variable

The variable may be a feature of data. For example, the variable may be a feature dimension of image data, for example, may be a semantic meaning in an image, for example, an ear region or a glasses region in an image including a portrait, or may be a pixel channel in an image, for example, an R channel, a G channel, or a B channel. For another example, the variable may be a type of partial segment of a chip, and the data of the variable may be an image of a type of partial segment of the chip. For another example, the variable may be a feature dimension of text data, for example, may be a root cause of a fault. The variable may alternatively be a feature dimension of audio data, a feature dimension of video data, or the like.

(8) Reinforcement learning

Reinforcement learning is a paradigm and a methodology of machine learning, and is used to describe and resolve a problem of how an intelligent agent (agent) achieves maximum returns or achieves a specific goal by learning of a policy in a process in which the intelligent agent interacts with an environment.

(9) Generative flow model

The generative flow model (which is also referred to as a flow-based generative model or a generative flow model) is a flow model that performs sampling in a sequential decision-making manner and constructs a composite structure, so that a probability of generating the structure is proportional to a reward (reward) value of the structure. The generative flow model constructs the composite structure in the sequential decision-making manner. A flow model is constructed based on a directed acyclic graph, that is, each status node has a plurality of parent nodes, which is different from that each status node in a tree structure has only one parent node. The model has only one initial node and a plurality of termination nodes. The model starts sampling from the initial node to generate an action sequence, completes status transition, and ends sampling when the termination node is reached. The termination node corresponds to the generated composite structure.

The initial node may include an output flow, an intermediate node may include an input flow and the output flow (or a reward), and the termination node may include the input flow and the reward. The flow model is imagined as a water pipe. A flow of water of the initial node is a total inflow of the model, and a total flow of water of all termination nodes is a total outflow of the model. For each intermediate node, an inflow is equal to an outflow. Inflow and outflow values of a node are predicted by using a neural network. A flow matching constraint is used as an objective function for optimization. The model may learn a policy (that is, optimizing the neural network), so that a probability of generating a composite structure through sampling is proportional to a reward of the composite structure. A structure with a higher reward is more likely to be sampled. In this way, the generative flow model may obtain a series of structures with high rewards through sampling.

For an example illustration of the generative flow model, refer to FIG. 6. As shown in FIG. 6, $s_i$ indicates a status, $x_j$ indicates a composite structure, $s_0$ is an initial node, and $s_5$, $s_8$, $s_{11}$, $s_{13}$, $s_{16}$ are termination nodes because the termination nodes correspond to the composite structure $x_5$, $x_8$, $x_{11}$, $x_{13}$, $x_{16}$.

(10) Bayesian network structure learning

Bayesian network structure learning is to search for a causality network structure that best matches a training sample set under the premise of a given data sample set.

(11) Directed acyclic graph

In a graph theory, if there is no way to start from any vertex and follow several edges to return to the vertex in a directed graph, the graph is a directed acyclic graph.

(12) Transitive closure

In the graph theory, a transitive closure *C* can describe whether a node can reach another node through a directed arrow. If there is an effective directed path from a node A to a node B, a value of the (B, A) location in an adjacency matrix is set to 1.

(13) Adjacency matrix

The adjacency matrix (adjacency matrix) is a square matrix indicating an adjacent relationship between vertices. A value of the adjacency matrix is 0 or 1, where 0 indicates no direct relationship, and 1 indicates a relationship. Values at symmetric locations and a diagonal of the adjacency matrix of the directed acyclic graph cannot be 1.

(14) Topological sequence

The topological sequence is sorting of activities in an order of the activities in a vertex activity network. The topological sorting is to perform topological sorting on a directed acyclic graph G, and is to sort all vertices in G into a linear sequence. Therefore, for any pair of vertices u and v in the graph, if an edge (u, v)□E(G), u appears before v in the linear sequence.

During existing implementation, causality between variables in a dataset is identified based on reinforcement learning. In this technology, a causal sequence with a highest score is found through reinforcement learning. In this technology, the dataset is first encoded, and each column is encoded as a status. In this case, orders of all statuses are random. Then, a Markov chain is used to determine the order for decoding, to generate an action sequence ($a_0$, $a_1$, ..., $a_7$). The sequence corresponds to a causal sequence. A graph corresponding to each causal sequence may be constrained as a directed acyclic graph according to a directed acyclic constraint function. In the conventional technology, accurate causality is selected by traversing a large quantity of causal sequences and based on a score of each causal sequence. In other words, a larger quantity of causal sequences needs to be traversed, to obtain more accurate causality. As search space (namely, a data amount and a quantity of variables) increases, a large amount of computing power and runtime are consumed.

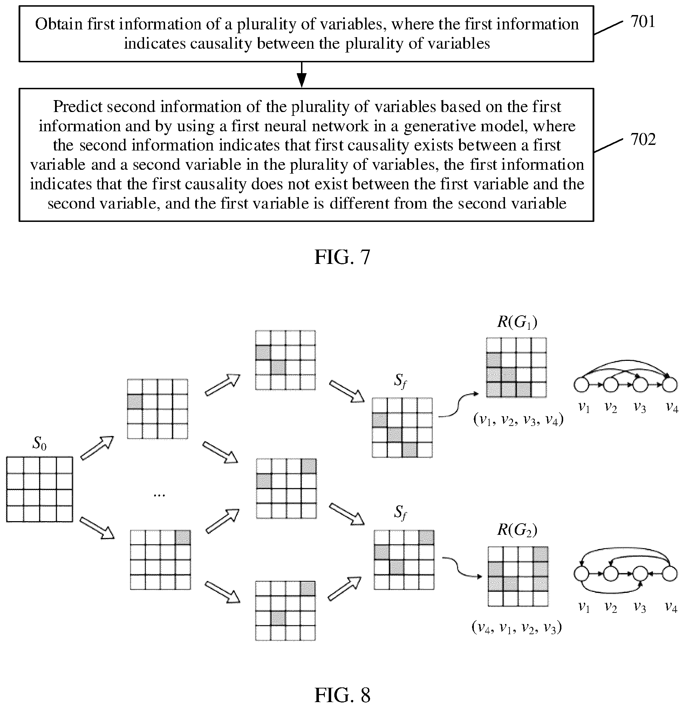

To resolve the foregoing problems, FIG. 7 is a schematic flowchart of a causality determining method according to an embodiment of this application. As shown in FIG. 7, the causality determining method provided in embodiments of this application includes the following steps.

701: Obtain first information of a plurality of variables, where the first information indicates causality between the plurality of variables.

In a possible implementation, an objective of embodiments of this application is to identify causality between a plurality of variables in a dataset (including a plurality of pieces of data). A to-be-identified dataset (including a plurality of pieces of data) may be obtained, and the dataset (or a plurality of variables in the dataset) is input to a model (for example, a generative flow model (which is also referred to as a flow-based generative model or a generative flow model) in embodiments of this application) for determining causality, to obtain a causality determining result.

The causality between the plurality of variables may include causality within each variable pair in the plurality of variables, and the variable pair may include two variables. The causality within the variable pair may be understood as causality between the variables included in the variable pair.

Causality within a variable pair (for example, a variable A and a variable B) may be understood as that the variable A causes the variable B, in other words, the variable A is used as a dependent variable of the variable B, and the variable B is used as an outcome variable of the variable A. Specifically, when other conditions remain unchanged, a change of the variable A causes a change of the variable B.

Causality within a variable pair (for example, a variable B and a variable A) may be understood as that the variable B causes the variable A, in other words, the variable B is used as a dependent variable of the variable A, and the variable A is used as an outcome variable of the variable B.

In a possible implementation, causality (for example, the first information and second information in embodiments of this application) may be indicated by using an adjacency matrix. The adjacency matrix (adjacency matrix) is a square matrix indicating an adjacent relationship between vertices. A value of the adjacency matrix is 0 or 1, where 0 indicates no direct relationship, and 1 indicates a relationship. Values at symmetric locations and a diagonal of the adjacency matrix of the directed acyclic graph cannot be 1. For example, the causality (for example, the first information in embodiments of this application) between the plurality of variables is as follows: a variable 1 causes a variable 2, and causality does not exist between other variables. The first information may be represented as follows:

$$\begin{matrix} 0 & 0 & 0 \\ 1 & 0 & 0 \\ 0 & 0 & 0 \end{matrix}$$

For the plurality of variables:
in a possible implementation, the variable may be a feature of data.

In a possible implementation, the variable may be a feature dimension of image data, for example, may be a semantic meaning in an image, for example, an ear region or a glasses region in an image including a portrait, or may be a pixel channel in an image, for example, an R channel, a G channel, or a B channel. Correspondingly, data of the variable may be data of the image data in the feature dimension, for example, a pixel value of the ear region or a pixel value of the glasses region in the image including a portrait, or may be a pixel value of the R channel, a pixel value of the G channel, or a pixel value of the B channel of the image.

For another example, the variable may be a type of partial segment of a chip, and the data of the variable may be an image of a type of partial segment of the chip.

In a possible implementation, the variable may be a feature dimension of text data, for example, may be a root cause of a fault. For example, the variable may be a KPI of a communication network or a node invoked by a computer transaction. Correspondingly, data of the variable may be a specific value of the KPI of the communication network, information about the node invoked by the computer transaction, or the like.

In a possible implementation, the variable may alternatively be a feature dimension of audio data a feature dimension of video data, or the like.

In embodiments of this application, the causality between the plurality of variables may be predicted based on the plurality of variables in the dataset and by using the generative flow model.

In a possible implementation, in one iteration of the generative flow model, the causality between the plurality of variables may be predicted for a plurality of times. A current time of causality prediction is performed based on causality predicted last time, until a predicted result meets a termination condition of one iteration. A result obtained in the "current time" of causality prediction includes the causality obtained in the "last time" of causality prediction, and further includes newly predicted causality within a variable pair.

For example, the plurality of variables may include the variable 1, the variable 2, and a variable 3. In one iteration of the generative flow model, the causality (for example, the first information in embodiments of this application) between the plurality of variables may be first predicted (for example, by using a first neural network in the generative flow model) as follows: The variable 1 causes the variable 2, and causality does not exist between other variables. If the first information does not meet a termination condition, richer causality (for example, the second information in embodiments of this application) between the plurality of variables may be predicted based on the first information and by using the generative flow model (for example, by using the first neural network in the generative flow model) as follows: The variable 1 causes the variable 2, the variable 2 causes the variable 3, and causality does not exist between other variables (which is equivalent to that in comparison with the first information, causality, in which "the variable 2 causes the variable 3", within a variable pair is added to the second information).

As described above, in one iteration, the first information of the plurality of variables may be predicted by using the generative flow model (for example, by using the first neural network in the generative flow model) in one prediction process. The first information may indicate the causality between the plurality of variables.

702: Predict the second information of the plurality of variables based on the first information and by using the first neural network in the generative flow model (generative model), where the second information indicates that first causality exists between a first variable and a second variable in the plurality of variables, the first causality indicates that the first variable serves as a dependent variable of the second variable, and the second variable serves as an outcome variable of the first variable, the first information indicates that the first causality does not exist between the first variable and the second variable, and the first variable is different from the second variable.

In a possible implementation, the generative flow model may include the first neural network.

In a possible implementation, the first neural network, a second neural network, and a third neural network may be multi-layer perceptrons (multi-layer perceptron, MLP). The MLP is a feedforward artificial neural network model that maps a plurality of input datasets to a single output dataset.

In a possible implementation, the generative flow model may further include an embedding layer, and the embedding layer may perform embedding processing on the causality between the plurality of variables, to obtain a corresponding embedding representation.

The first neural network performs a next time of causality prediction based on causality predicted in a time of prediction in one iteration. For example, the "causality predicted in a time of prediction" may be the first information, and the first neural network may predict the second information of the plurality of variables based on the first information (for example, inputting the first information (or an embedding representation corresponding to the first information) to the first neural network). The second information includes more (for example, a quantity of variable pairs included in the second information exceeds one or more than that included in the first information) variable pairs between which causality exists than the first information.

It can be learned that, the generative flow model in this embodiment of this application does not directly obtain a plurality of pieces of candidate causality through sampling, and select good causality from the plurality of pieces of candidate causality. Instead, causality between a plurality of variables is sequentially generated in a sequence generation manner in each iteration. Each time of generation is performed based on a result generated last time, and causality is enriched as a causality generation process proceeds.

In embodiments of this application, causal discovery is converted into a process in which the generative flow model is used to sample a series of actions (that is, discovering new causality), to generate a composite object (namely, the causality between the plurality of variables). Optionally, in embodiments of this application, statuses (namely) may be connected by using a DAG structure-based generative flow model. A status S is an adjacency matrix (a value is 0/1) corresponding to a directed acyclic graph. For example, as shown in FIG. 8, an action a is marking a value at a location in the adjacency matrix as 1. The flow model has a unique initial node $S_0$ that is an all-0 adjacency matrix and that corresponds to a node without an edge connection.

The following describes how to obtain the second information based on the first information and by using the first neural network in the generative flow model.

In a possible implementation, a probability that causality exists between each of a plurality of variable pairs may be obtained based on the first information and by using the first neural network in the generative flow model. The second information is obtained based on a highest probability that the first causality exists in the variable pair that is in the plurality of variable pairs and that includes the first variable and the second variable.

In other words, the first neural network may select a variable pair from the plurality of variable pairs including the plurality of variables (the plurality of variable pairs do not have causality in the first information), and the selected variable pair may have causality in the second information.

In a possible implementation, the first information indicates that causality exists between M variable pairs in the plurality of variables, and the second information indicates that causality exists between M+1 variable pairs. The M+1 variable pairs include the M variable pairs and a variable pair including the first variable and the second variable.

In FIG. 8, the initial node $S_0$ is located in a first column, a second column represents that $x_1 \rightarrow x_2$ (upper) and $x_4 \rightarrow x_1$ (lower) edges are added to two causal graphs, and a third column represents that edges are added based on the second column. It may be found that the two matrices in the second column may point to a matrix in the middle of the third column, which indicates that the status node may have a plurality of parent nodes.

A variable pair with causality may be selected according to a specific constraint rule, to ensure that the selected variable pair (for example, the first variable and the second variable in embodiments of this application) can enable a graph corresponding to the second information to be a directed acyclic graph. Alternatively, even if the selected variable pair (for example, the first variable and the second variable in embodiments of this application) can enable a graph corresponding to the second information to be a directed cyclic graph, the second information is not used. The following describes the two manners.

Manner 1: Based on a target constraint

In a possible implementation, a target constraint may be obtained based on the first information. The target constraint is used to constrain that causality does not exist between a plurality of variable pairs in the second information, each variable indicates a node in a graph, a node corresponding to a variable serving as a dependent variable points to a node corresponding to a variable serving as an outcome variable, and the target constraint is used to constrain the graph corresponding to the second information to be a directed acyclic graph. Correspondingly, the second information of the plurality of variables may be predicted based on the first information and the target constraint and by using the first neural network in the generative flow model.

In other words, selection of the variable pair by the first neural network may be constrained based on the target constraint, so that the causality added to the second information does not cause the graph corresponding to the second information to become a directed cyclic graph.

The following describes how to obtain a target constraint with the foregoing capability (which can constrain selection of the variable pair by the first neural network, so that the causality added to the second information does not cause the graph corresponding to the second information to become a directed cyclic graph) based on the first information.

In a possible implementation, the plurality of variable pairs include a target variable pair, and the target variable pair includes a third variable and a fourth variable. It should be understood that the target variable pair may be any variable pair that is indicated by the target constraint and that does not have causality in the second information.

In a possible implementation, when the first information indicates that the third variable serves as a dependent variable of the fourth variable, and the fourth variable serves as an outcome variable of the third variable, the target constraint constrains the second information to indicate that the third variable does not serve as a dependent variable of the fourth variable, and the fourth variable does not serve as an outcome variable of the third variable.

In other words, causality that is the same as that in the first information does not appear in the second information.

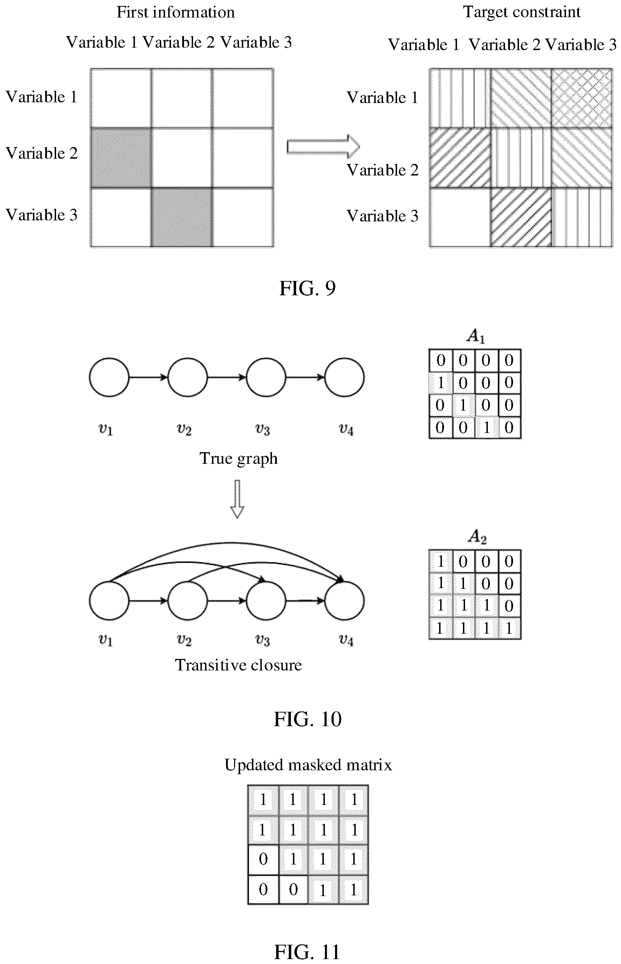

Refer to FIG. 9. For example, a gray box in the first information represents a variable pair with causality. For example, a shadow box on the left of the first information represents causality in which a variable 1 causes a variable 2, and a shadow box on the right of the first information represents causality in which the variable 2 causes a variable 3. Correspondingly, boxes including lines from top right to bottom left in the target constraint represent causality that cannot exist in the second information. For example, the target constraint may constrain that the second information cannot include causality in which the variable 1 causes the variable 2, and cannot include causality in which the variable 2 causes the variable 3.

In a possible implementation, when the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable.

In other words, causality that is opposite to that in the first information does not appear in the second information.

Refer to FIG. 9. For example, a gray box in the first information represents a variable pair with causality. For example, a shadow box on the left of the first information represents causality in which a variable 1 causes a variable 2, and a shadow box on the right of the first information represents causality in which the variable 2 causes a variable 3. Correspondingly, boxes including lines from top left to bottom right in the target constraint represent causality that cannot exist in the second information. For example, the target constraint may constrain that the second information cannot include causality in which the variable 2 causes the variable 1, and cannot include causality in which the variable 3 causes the variable 2.

In a possible implementation, when the third variable is the same as the fourth variable, the target constraint constrains the second information to indicate that causality does not exist between the third variable and the fourth variable.

In other words, a case in which causality exists between same data does not occur in the second information.

Refer to FIG. 9. For example, boxes including vertical lines in the target constraint represent causality that cannot exist in the second information. For example, the target constraint may constrain that the second information cannot include causality in which the variable 1 causes the variable 1, cannot include causality in which the variable 2 causes the variable 2, and cannot include causality in which the variable 3 causes the variable 3.

In a possible implementation, each variable indicates a node in a graph, a node corresponding to a variable serving as a dependent variable points to a node corresponding to a variable serving as an outcome variable, and when a graph corresponding to the first information indicates that a connection path exists between the third variable and the fourth variable, the target constraint constrains the second information to indicate that the third variable does not serve as an outcome variable of the fourth variable, and the fourth variable does not serve as a dependent variable of the third variable.

In other words, a case in which a head node and a tail node, in the first information, between which a causality path (directions on the path are the same) exists are opposite does not occur in the second information.

Refer to FIG. 9. For example, a gray box in the first information represents a variable pair with causality. For example, a shadow box on the left of the first information represents causality in which a variable 1 causes a variable 2, and a shadow box on the right of the first information represents causality in which the variable 2 causes a variable 3. In other words, a connection path from the variable 1 and the variable 2 to the variable 3 exists in the first information, a head node is the variable 1, and a tail node is the variable 3, which is equivalent to that the variable 1 may indirectly cause the variable 3. A box including cross line segments in the target constraint represents causality that cannot exist in the second information. For example, the target constraint may constrain that the second information cannot include causality in which the variable 3 causes the variable 1.

The following describes how to determine the foregoing variables that have a connection path.

In the graph theory, a transitive closure C can describe whether a node can reach another node through a directed arrow (that is, whether a connection path exists).

In FIG. 10, an actual directed acyclic graph is $v_i \rightarrow v_2 \rightarrow v_3 \rightarrow v_4$. In a transitive closure, there are arrows between $v_1$ and $v_3$, $v_4$. This is the same for $v_2$ and $v_3$. $A_1$ is an adjacency matrix corresponding to an actual DAG, and $A_2$ is an

adjacency matrix corresponding to the transitive closure.

Therefore, it can be found that $v_3$ and $v_4$ are "descendants" of $v_1$, and cannot have arrows pointing to $v_1$.

This is equivalent to that the transitive closure may be used to determine causality that is the same as that in the first information, a first node, that exists in the first information, of the connection path, the transitive closure, and causality that exists in the transitive closure. After the transitive closure is obtained, the adjacency matrix corresponding to the transitive closure may be transposed, and an intersection set between the transposed adjacency matrix and the adjacency matrix of the first information is obtained, to obtain the target constraint.

When the target constraint is represented as a mask matrix, the mask matrix may be defined as:

$$M_1 = A_1 + A_2^T$$

Based on an updated mask matrix, a valid action set in this status is a location whose value is 0 in the mask matrix, and an action cannot be performed at a location whose value is 1 (for example, refer to FIG. 11).

For example, the following uses an example to describe a process of calculating the target constraint in embodiments of this application.

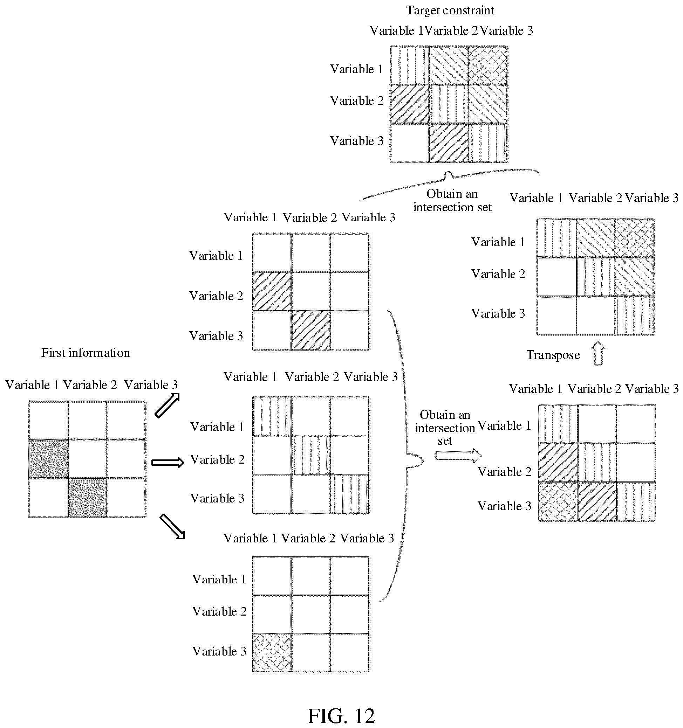

Refer to FIG. 12. The first information may indicate causality in which the variable 1 causes the variable 2 and the variable 2 causes the variable 3. After an adjacency matrix indicating causality that is the same as that in the first information, an adjacency matrix indicating causality of variables, and an adjacency matrix indicating that causality of the connection path exists in the first information are obtained, an intersection set between the adjacency matrices is obtained, to obtain a closure matrix. After the closure matrix is transposed, an intersection set between the transposed closure matrix and the adjacency matrix indicating causality that is the same as that in the first information may be obtained, to obtain the target constraint.

It should be understood that complexity of the foregoing calculation steps (for example, obtaining an intersection set, obtaining a transpose, and calculating a product of a matrix) to obtain a target matrix through solving is O(1). However, during existing implementation, a calculation process with complexity of O($d^3$) needs to be performed, to obtain the causality of the directed acyclic graph, where d is a quantity of variables. In other words, in embodiments of this application, the causality is predicted based on the target constraint and by using the first neural network, to greatly reduce operation complexity when it is ensured that the predicted causality graph is a directed acyclic graph.

In a possible implementation, when predicting the causality between the plurality of variables based on the first information, the first neural network may select, based on the target constraint, at least one variable pair that meets the target constraint from the plurality of variable pairs including the plurality of variables, and select, from the at least one variable pair, a variable pair, in the second information, between which causality exists.

In a possible implementation, when predicting the causality between the plurality of variables based on the first information, the first neural network may assign, based on the target constraint, a probability that a plurality of variable pairs that are in the plurality of variable pairs and that do not meet the target constraint are selected to 0 or a value close to 0, for example, may be assigned to $1^{-5}$, $1^{-4}$, $1^{-5}$, $1^{-6}$, or the like. Further, when the first neural network predicts the causality between the plurality of variables based on the first information, at least one variable pair that does not meet the target constraint is not sampled.

For example, the first information $S_i$ enters, as a status, a network of the generative flow model, and is transferred through embedding to the first neural network that is masked by the mask matrix. Then, an action a is obtained through sampling, so that another location of the adjacency matrix is marked as 1 (1 indicates that causality exists between the variable pair), and second information is obtained. Further, one status transition can be completed.

In a possible implementation, after the second information is obtained, whether a current round of iteration ends (that is, whether the second information is a termination node) may be determined based on the second information.

If the second information indicates that the current round of iteration does not end, the first neural network may be used to continue to predict the causality between the plurality of variables based on the second information.

It should be understood that, if the generative flow model is a trained model, and the second information indicates that the current round of iteration ends, a causality identification result may be obtained and output.

It should be understood that, in a model training process, if the second information indicates that the current round of iteration ends, a loss function may be determined, the generative flow model is updated according to the loss function (or updated after an iteration of other data of a batch is completed), and a next round of iteration starts.

In a possible implementation, it may be determined, based on that the second information indicates that causality exists between any variable and at least one variable in the plurality of variables, that a current round of iteration ends (that is, the second information is a termination node).

In a possible implementation, it may be determined, based on an adjacency matrix that is obtained through calculation and that is of a transitive closure, whether the termination node is reached. For example, when the adjacency matrix of the transitive closure can help identify a unique topology sequence, the termination node is reached.

In this embodiment of this application, a loss function (a difference is minimized) may be constructed based on a difference (the difference is minimized) between an input flow and an output flow of each intermediate status (for example, the first information) and a difference (the difference is minimized) between an input flow and a reward of the termination node (for example, the second information). The generative flow model may be updated according to the loss function, so that the generative flow model can gradually have a capability of finding more accurate causality between a plurality of variables.

Specifically, in a possible implementation, the generative flow model may use the causality between the plurality of variables as statuses of nodes; sequentially transfer the statuses; when the termination node is reached, obtain the input flow and the output flow of the intermediate node and the input flow and the reward of the termination node based on the status of each node; and further construct a loss function based on the input flow and the output flow of the intermediate node and the input flow and the reward of the termination node, to update the generative flow model.

The updated generative flow model may repeatedly use the causality between the plurality of variables as the statuses of the nodes, and sequentially transfer the statuses, to construct the loss function, and update the generative flow model for a plurality of times until the generative flow model converges. The converged generative flow model may use the causality between the plurality of variables as the statuses of the nodes, and sequentially transfer the statuses. Causality indicated by the termination node may be used as the causality between the plurality of variables and output.

The following describes a process of calculating an input flow and an output flow of the first information.

In a possible implementation, a plurality of pieces of third information may be obtained based on the first information. The first information indicates that causality exists between M variable pairs in the plurality of variables, each piece of third information indicates that causality exists between variables in some of the M variable pairs, and M is a positive integer greater than 1.

Each piece of third information may be used as the parent node of the first information.

The first information may include M pieces of causality, and a quantity of pieces of third information is also M. Each piece of third information is obtained by removing one piece of causality from the M pieces of causality in the first information. In other words, each piece of third information may indicate M-1 pieces of causality.

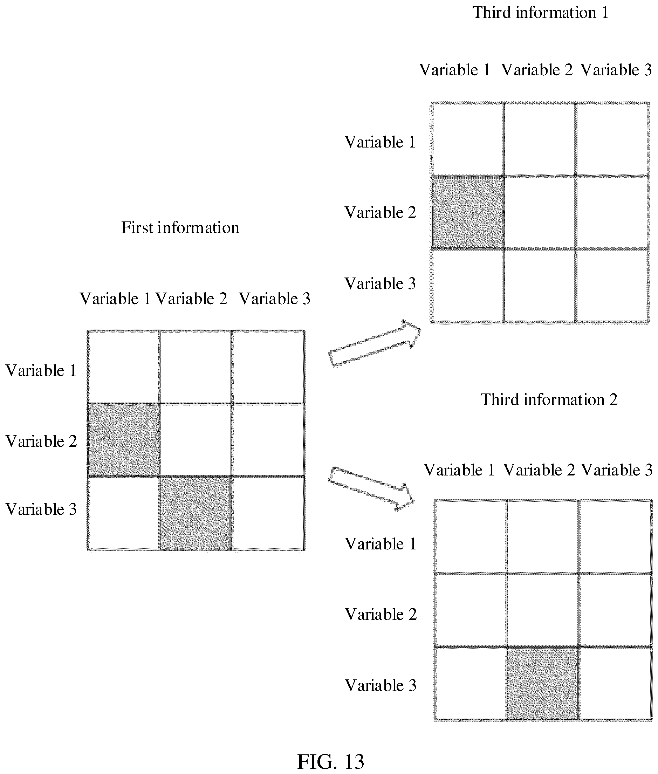

Refer to FIG. 13. For example, the first information may indicate the following causality: The variable 1 causes the variable 2, and the variable 2 causes the variable 3. The third information may include third information 1 and third information 2. The third information 1 may indicate that the variable 1 causes the variable 2, and the third information 1 may indicate that the variable 2 causes the variable 3.

In a possible implementation, a first input flow (input flow, which is also referred to as a probability of the third information) of the plurality of pieces of third information may be obtained based on the plurality of pieces of third information and by using the second neural network in the generative flow model. An embedding representation of each piece of third information may be obtained based on the plurality of pieces of third information, and the embedding representation of each piece of third information is input to the second neural network, to obtain an input flow of each piece of third information. A sum of input flows of the plurality of pieces of third information may be the first input flow of the plurality of pieces of third information, and the first input flow may be understood as a flow input to the first information.

For example, for the first information $S_i$, all parent nodes $S_p$ of the first information and action sets in which the parent nodes are transferred to $S_i$ need to be found. After embedding is performed on the parent nodes, the parent nodes and the action sets $(a_1, \dots, a_n)$ are transferred to an inflow function $F(S_p \to S_i)$ of a computing node $S_i$ of the second neural network.

In a possible implementation, a first output flow (output flow, which is also referred to as a probability of the first information) of the first information may be obtained based on the first information and by using the third neural network in the generative flow model. An embedding representation of the first information may be obtained based on the first information, and the embedding representation of the first information is input to the third neural network, to obtain an output flow of the first information.

In a possible implementation, a degree of difference (for example, the difference is minimized) between the first input flow and the first output flow is used to construct a loss function, and the first neural network, the second neural network, and the third neural network may further be updated according to the loss function.

When the second information is the termination node (for determining logic of the termination node, refer to the descriptions in the foregoing embodiment, and details are not described herein again), an input flow and a reward of the second information may be calculated, and the loss function is constructed based on a degree of difference between the input flow and the reward. The following describes calculation processes of the input flow and the reward of the second information.

In a possible implementation, a plurality of pieces of fourth information may be obtained based on the second information. The third information indicates that causality exists between N variable pairs in the plurality of variables, each piece of fourth information indicates that causality exists between variables in some of the N variable pairs, and N is a positive integer greater than 1. A second input flow of the plurality of pieces of fourth information is obtained based on the plurality of pieces of fourth information and by using the second neural network in the generative flow model. For calculation of the input flow of the second information, refer to the calculation of the input flow of the first information in the foregoing embodiments. Details are not described herein again.

In a possible implementation, a first reward of the second information may be obtained based on the second information. The first reward indicates a coincidence degree of joint distribution of the second information and the dataset of the plurality of variables, and a degree of difference between the second input flow and the first reward is used to construct a loss function. The first neural network, the second neural network, and the third neural network are updated according to the loss function.

In embodiments of this application, for an intermediate node (neither a start node $S_0$ nor a termination node $S_f$), an inflow and an outflow of the node are calculated by using a neural network. For $S_0$, only an outflow of the node is calculated. For $S_f$, only an inflow is calculated. A reward of G corresponding to $S_f$ is calculated and used as a reward of the termination node. A target function of the present invention is to meet a flow matching constraint, so that an inflow of a node is equal to an outflow of the node. A formula may be as follows:

$$\tilde{\mathcal{L}}_\theta(\tau) = \sum_{s' \in \tau \neq s_0} \left( \sum_{s,a:T(s,a)=s'} F_\theta(s,a) - \mathbb{I}_{s' \in s_f} R(s') - \mathbb{I}_{a' \in \mathcal{A}(s')} \sum_{a' \in \mathcal{A}(s')} F_\theta(s',a') \right)^2$$

For each node, a difference between an inflow value and a reward or a difference between an outflow value and a reward of the node may be calculated, and then summation is performed on differences of all nodes, to calculate a total loss.

The inflow of the node may be as follows:
$\Sigma_{s,a:T(s,a)=s'} F_\theta(s, a)$, where a method is to find all parent nodes of the node and actions of the parent nodes, and transfer the parent nodes and the actions to the neural network for calculation.

The outflow of the node may be as follows:
$\Pi a' \in A(s') \Sigma_{a' \in A(s')} F_\theta(s', a')$, where a method is to transfer the node to the neural network for calculation, and there is an indication function used to determine whether the node is an intermediate node.

The reward of the termination node may be as follows: $\Pi s' \in s_f R(s')$, where a reward function may be defined as follows:

$$S_{BIC}(\mathcal{G}) = nd \times \log \left( \sum_{i=1}^{d} RSS_i/nd \right)$$

$$Reward = e^{-S(\mathcal{G})}$$

In a possible implementation, a Bayesian information criterion may be used to determine a fitting degree of the model, and an exponential function is used to prevent a negative value from affecting a constraint that an inflow is equal to an outflow.

It should be understood that, after it is determined that the second information meets the termination node condition, a fully connected causal result corresponding to the second information may be obtained by using the closure matrix, and the reward of the second information may be calculated based on a fully connected causal structure.

In the foregoing manner, in each iteration, a loss may be determined, and the generative flow model is updated based on the loss. After a plurality of rounds of iterative update, the generative flow model can have a capability of accurately identifying causality between a plurality of variables, to obtain accurate causality between the plurality of variables.

The following uses a specific example to describe a method for predicting causality based on a target constraint.

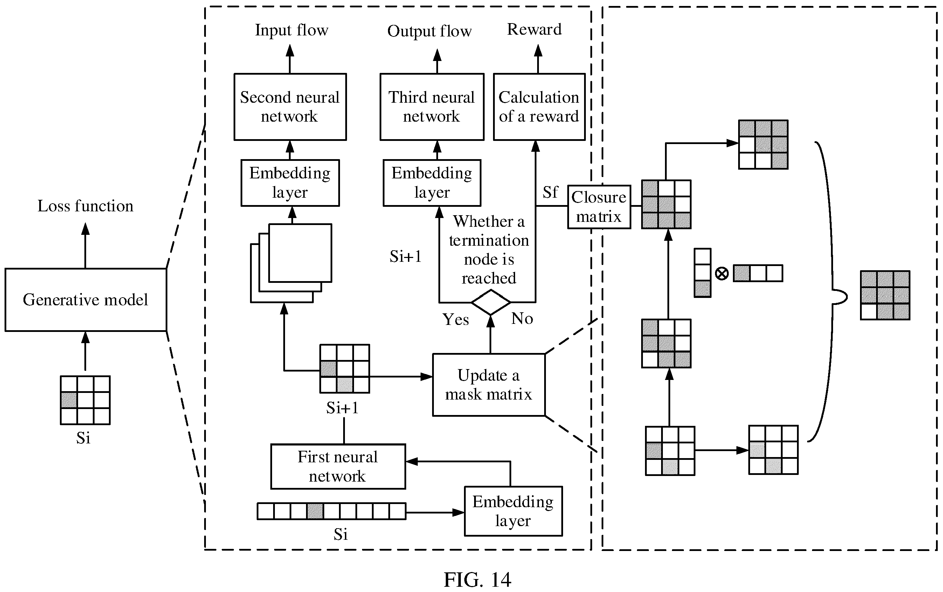

For example, the target constraint is a mask matrix. FIG. 14 shows a temporal-difference update framework in this embodiment. A reward of the termination node is calculated, and only an inflow value and an outflow value of the intermediate node is calculated. In this example, a determining condition of the termination node is that a unique topological sequence between all nodes is identified.

First, $S_i$, as a status, enters the network of the generative flow model, and is transferred through embedding to the neural network that is masked by the mask matrix. Then, an action a is obtained through sampling, so that another location of the adjacency matrix is marked as 1. One status transition is completed. For $S_{i+1}$, all parent nodes $S_p$ and action sets in which the parent nodes are transferred to $S_{i+1}$ need to be found. After embedding is performed on the parent nodes, the parent nodes and the action sets $(a_1, \ldots, a_n)$ are transferred to an inflow function $F(S_p \to S_{i+1})$ of a computing node $S_{i+1}$ of the neural network.

In addition, the mask matrix and the adjacency matrix of the transitive closure need to be updated, as shown on the right side of FIG. 14. In this update, if it is found that the adjacency matrix of the transitive closure can help identify the unique topological sequence, the termination node is reached, and the transitive closure in which a diagonal element is masked is returned as $S_f$ for calculation of the reward. If the sequence cannot be identified, sampling continues. When a left determining branch proceeds, embedding is performed on $S_{i+1}$, and $S_{i+1}$ is transferred to an outflow function $F(S_{i+1} \rightarrow S_c)$ of the computing node $S_{i+1}$ of the neural network. In the network, the loss (loss) is calculated based on the flow matching constraint.

2. Not based on a target constraint

In a possible implementation, when the first neural network predicts the second information based on the first information, the target constraint that can ensure that the second information is a directed acyclic graph may not be used. Therefore, the second information may become a directed cyclic graph or another graph that does not meet a requirement.

In a possible implementation, when predicting the second information based on the first information, the first neural network may predict a data pair with causality from variable pairs without causality that are indicated by the first information, to obtain the second information. If the second information is a directed acyclic graph and does not meet a termination node condition based on the target constraint, the first neural network may continue to predict causality between the plurality of variables based on the second information.

If the second information is a directed cyclic graph or another graph that does not meet a requirement, it may be considered that the second information is a termination node. A current iteration ends, and the generative flow model is updated according to the constructed loss function.

For the intermediate node, an example in which the first information is the intermediate node is used. In a possible implementation, the plurality of pieces of third information may be obtained based on the first information. The first information indicates that causality exists between the M variable pairs in the plurality of variables, each piece of third information indicates that causality exists between variables in some of the M variable pairs, and M is a positive integer greater than 1. The first input flow of the plurality of pieces of third information is obtained based on the plurality of pieces of third information and by using the second neural network in the generative flow model. A second reward of the first information is obtained based on the first information, where the second reward indicates a coincidence degree of joint distribution of the first information and a dataset of the plurality of variables. The first output flow of the first information is obtained based on the first information and by using the third neural network in the generative flow model. The first input flow and a summation result of the first output flow and the second reward are used to construct a loss function, and the first neural network, the second neural network, and the third neural network may further be updated according to the loss function.

For the termination node, an example in which the second information is the termination node is used. In a possible implementation, the plurality of pieces of fourth information may be obtained based on the second information. The third information indicates that causality exists between the N variable pairs in the plurality of variables, each piece of fourth information indicates that causality exists between variables in some of the N variable pairs, and N is a positive integer greater than 1. The second input flow of the plurality of pieces of fourth information is obtained based on the plurality of pieces of fourth information and by using the second neural network in the generative flow model. The first reward of the second information is obtained based on the second information, where the first reward indicates the coincidence degree of joint distribution of the second information and the dataset of the plurality of variables. The degree of difference between the second input flow and the first reward is used to construct a loss function, and the first neural network, the second neural network, and the third neural network are updated according to the loss function.

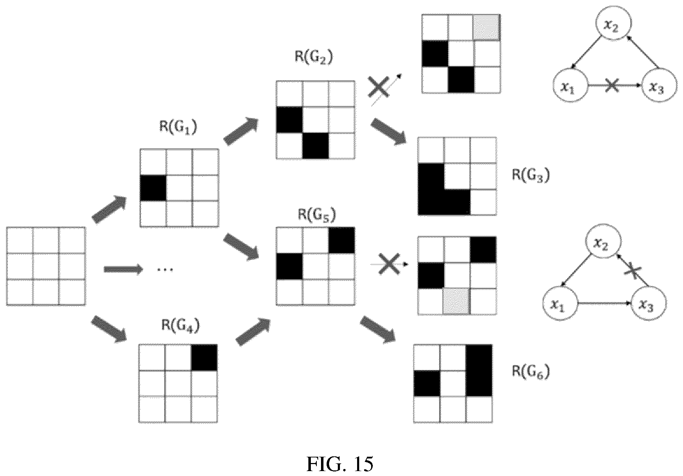

A difference between the manner that is not based on the target constraint and the manner based on the target constraint lies in the determining condition of the termination node, calculation of the reward of the status node, and the temporal-difference update framework. As shown in FIG. 15, similar to a dense reward in reinforcement learning, the framework calculates a reward and an outflow for each generated DAG, and the determining condition of the termination node changes to: generating a cyclic graph, for example, a location in red in a matrix in a fourth column in FIG. 15. Therefore, in this embodiment, a reward of a status of each intermediate node may be calculated, and a constraint of an intermediate node in a flow matching model is also changed to: inflow value = outflow value + reward.

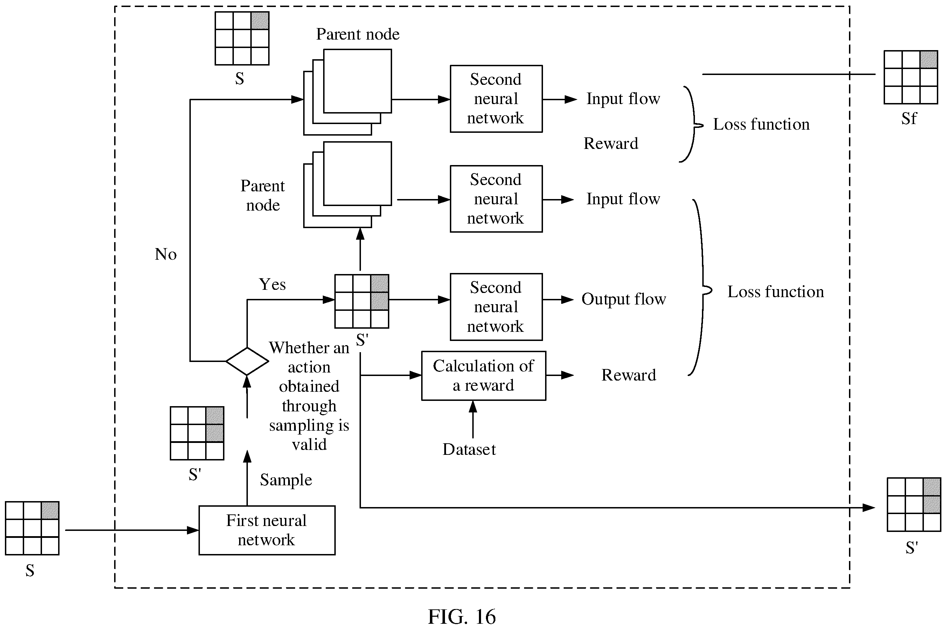

FIG. 16 shows a temporal-difference update framework that is not based on a target constraint according to an embodiment. First, $S$, as a status, enters the network (for example, the MLP) of the generative flow model, and an action a is obtained through sampling. Then, whether a is in a valid action set is determined. If the action is invalid, all parent nodes $S_p$ of a and an action set in which the parent nodes are transferred to $S$ are directly found, and transferred to the inflow function of the computing node $S$ of the neural network. A reward of $S$ is calculated according to a reward function. If the action is valid, one status transition $S \rightarrow S'$ is completed. Methods for calculating a reward, an inflow, and an outflow of $S'$ are similar. Finally, the loss function loss is calculated by using a flow matching target function.

An embodiment of this application provides a causality determining method. The method includes: obtaining first information of a plurality of variables, where the first information indicates causality between the plurality of variables; and predicting second information of the plurality of variables based on the first information and by using a first neural network in a generative flow model, where the second information indicates that first causality exists between a first variable and a second variable in the plurality of variables, the first information indicates that the first causality does not exist between the first variable and the second variable, and the first variable is different from the second variable. Causality between variables is identified in a sequence generation manner. With iterative update of the generative flow model, the generative flow model can have a capability of generating a good causality sequence, and a large quantity of causal sequences does not need to be sampled to select a good causality sequence. This reduces computing capability overheads and improves a convergence speed of the model.

An embodiment of this application further provides a causality determining method. The method includes: obtaining first information of a plurality of variables, where the first information indicates causality between the plurality of variables, the variable includes an operation type of a user and at least one target variable, and the target variable is at least one of the following:

attribute information of an item and attribute information of the user; and
predicting second information of the plurality of variables based on the first information and by using a first neural network in a generative flow model, where
the second information indicates that first causality exists between a first variable and a second variable in the plurality of variables, the first information indicates that the first causality does not exist between the first variable and the second variable, and the first variable is different from the second variable.

In a possible implementation, the attribute information of the user includes at least one of the following: a gender, an age, an occupation, an income, a hobby, and an educational level.

In a possible implementation, the attribute information of the item includes at least one of the following: a name of the item, a developer, an installation package size, a category, and a positive rating.

The attribute information of the user may be an attribute related to a preference feature of the user, for example, at least one of a gender, an age, an occupation, an income, a hobby, and an educational level. The gender may be a male or a female, the age may be a number ranging from 0 to 100, the occupation may be a teacher, a programmer, a chef, and the like, the hobby may be basketball, tennis, running, and the like, and the educational level may be a primary school, a middle school, a high school, a university, or the like. A specific type of the attribute information of the user is not limited in this application.

The item may be a physical item or a virtual item, for example, may be an APP, an audio/video, a web page, and news. The attribute information of the item may be at least one of a name of the item, a developer, an installation package size, a category, and a positive rating. For example, the item is an application program. The category of the item may be a chat type, a parkour game, an office type, or the like. The positive rating may be a score, a comment, or the like on the item. A specific type of the attribute information of the item is not limited in this application.

The operation type may be a behavior operation type of the user for an item. On a network platform and an application, the user usually interacts with the item in various forms (that is, there are a plurality of operation types), for example, operation types such as browsing, clicking, adding to a shopping cart, and purchasing of behavior of the user in an e-commerce platform.

It should be understood that the causality between the plurality of variables that is finally obtained by using the generative flow model may include causality between at least one target variable and the operation type of the user.

For other descriptions of this embodiment of this application, refer to the causality determining method described in the foregoing embodiments. Details are not described herein again.

An embodiment of this application further provides a causality determining method. The method includes:

obtaining first information of a plurality of variables, where the first information indicates causality between the plurality of variables, and the variable includes attribute information of a target object, where
the target object is a chip, and the attribute information is a partial segment or fault information of the chip; or
the target object is a node in a communication network, and a target variable is a key performance indicator KPI, running data, or alarm information of a network element; and
predicting second information of the plurality of variables based on the first information and by using a first neural network in a generative flow model, where
the second information indicates that first causality exists between a first variable and a second variable in the plurality of variables, the first information indicates that the first causality does not exist between the first variable and the second variable, and the first variable is different from the second variable.

The partial segment of the chip may be a partial region on a surface of the chip, a plurality of partial segments may be a plurality of partial regions on the surface of the chip, and areas and shapes of outer contours of any two partial segments in the plurality of partial segments are the same. The same areas of the partial segments may be understood as that areas of regions in which the partial segments are located are the same, and the same shapes of the outer contours of the partial segments may be understood as that outer contours of the regions in which the partial segments are located have a same shape, for example, a square or a rectangle with a same length-to-width ratio. In a possible implementation, an area of each of the plurality of partial segments is within a preset range, and the area of each partial segment cannot be too large or too small. The area of the partial segment may be related to a size of the chip, and a larger size of the chip indicates a larger area of the partial segment. For example, the area of the partial segment may be proportional to an area of the chip. Alternatively, the area of the partial segment may be related to a length of an interval between basic units of the chip. For example, a side length of the partial segment may be set to a preset multiple, for example, three times, four times, or five times, of the length of the interval between the basic units (for example, a copper-plated polygon region of the chip). Each partial segment may include arranged components and/or a connection line between components. In this embodiment of this application, the partial segment may specifically be obtained image information of each partial fragment or other obtained information that can express component arrangement or a connection line structure on the partial segment, and a structure feature of the partial segment may be uniquely determined based on the information.

The fault information of the chip may include a quantity of times that each partial segment appears in a diagnosis report, a probability that each partial segment causes a chip fault in a faulty chip, or the like.

The KPI may be used to measure a running status of the network element in the communication network. Usually, an anomaly detection device collects observation data of each KPI at different moments.

For other descriptions of this embodiment of this application, refer to the causality determining method described in the foregoing embodiments. Details are not described herein again.

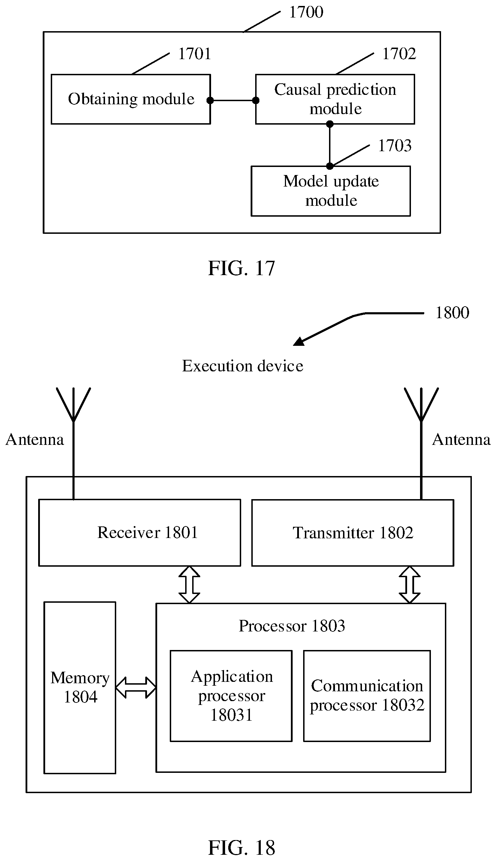

FIG. 17 is a schematic diagram of a structure of a causality determining apparatus according to an embodiment of this application. The apparatus 1700 includes:

> an obtaining module 1701, configured to obtain first information of a plurality of variables, where the first information indicates causality between the plurality of variables, where
> for a specific description of the obtaining module 1701, refer to the descriptions of step 701 in the foregoing embodiment, and details are not described herein again; and
> a causal prediction module 1702, configured to predict second information of the plurality of variables based on the first information and by using a first neural network in a generative flow model, where
> the second information indicates that first causality exists between a first variable and a second variable in the plurality of variables, the first information indicates that the first causality does not exist between the first variable and the second variable, and the first variable is different from the second variable.

For a specific description of the causal prediction module 1702, refer to the descriptions of step 702 in the foregoing embodiment. Details are not described herein again.

In a possible implementation, the first information indicates that causality exists between X variable pairs in the plurality of variables, and the second information indicates that causality exists between X+1 variable pairs. The X+1 variable pairs include the X variable pairs and a variable pair including the first variable and the second variable.

In a possible implementation, each variable is one of the following:
a feature dimension of image data, a feature dimension of text data, a feature dimension of audio data, and a feature dimension of video data.

In a possible implementation, the apparatus further includes:

> a model update module 1703, configured to: obtain a first input flow of the first information based on the first information and by using a second neural network in the generative flow model;
> obtain a first output flow of the first information based on the first information and by using a third neural network in the generative flow model, where a degree of difference between the first input flow and the first output flow is used to obtain a loss function; and
> update the first neural network, the second neural network, and the third neural network according to the loss function.

In a possible implementation, the model update module 1703 is specifically configured to:

> obtain a plurality of pieces of third information based on the first information, where the first information indicates that causality exists between variables in M variable pairs, each piece of third information indicates that causality exists between variables in some of the M variable pairs, and M is a positive integer greater than 1; and
> obtain the first input flow of the first information based on the plurality of pieces of third information and by using the second neural network in the generative flow model.

In a possible implementation, the some variable pairs are M-1 variable pairs in the M variable pairs.

In a possible implementation, the apparatus further includes:

the model update module 1703, configured to obtain a second reward of the first information based on the first information, where the second reward indicates a coincidence degree of joint distribution of the first information and a dataset of the plurality of variables; and
that a degree of difference between the first input flow and the first output flow is used to construct a loss function includes:
the first input flow and a summation result of the first output flow and the second reward are used to construct the loss function.

In a possible implementation, the apparatus further includes:

the model update module 1703, configured to: obtain a second input flow of the second information by using the second neural network in the generative flow model;
obtain a first reward of the second information based on the second information and by using the third neural network in the generative flow model, where a degree of difference between the second input flow and the first reward is used to construct a loss function; and
update the first neural network, the second neural network, and the third neural network according to the loss function.

In a possible implementation, the obtaining a second input flow of the second information based on the second information and by using the second neural network in the generative flow model includes:

obtaining a plurality of pieces of fourth information based on the first information, where the second information indicates that causality exists between variables in N variable pairs, each piece of fourth information indicates that causality exists between variables in some of the N variable pairs, and N is a positive integer greater than 1; and
obtaining the second input flow of the second information based on the plurality of pieces of fourth information and by using the second neural network in the generative flow model.

In a possible implementation, the model update module 1703 is further configured to:
trigger, based on that the second information indicates that causality exists between any variable and at least one variable in the plurality of variables, execution of the step of obtaining the first reward of the second information based on the second information.

In a possible implementation, the second information corresponds to a first graph, each variable corresponds to a node in the first graph, a node corresponding to a variable serving as a dependent variable in the second information points to a node corresponding to a variable serving as an outcome variable, and the model update module 1703 is further configured to:
trigger, based on the first graph being a directed cyclic graph, execution of the step of obtaining the first reward of the second information based on the second information.

In a possible implementation, the apparatus further includes:

a constraint obtaining module, configured to obtain a target constraint based on the first information, where the target constraint is used to constrain that causality does not exist between a plurality of variable pairs in the second information; and
the predicting second information of the plurality of variables based on the first information and by using a first neural network in a generative flow model includes:
predicting the second information of the plurality of variables based on the first information and the target constraint and by using the first neural network in the generative flow model.

In a possible implementation, the second information corresponds to the first graph, each variable corresponds to the node in the first graph, the node corresponding to the variable serving as the dependent variable in the second information points to the node corresponding to the variable serving as the outcome variable, and the target constraint is used to constrain the first graph to be a directed acyclic graph.

In a possible implementation, the plurality of variable pairs include a target variable pair, and the target variable pair includes a third variable and a fourth variable.

When the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable; or

when the third variable is the same as the fourth variable, the target constraint constrains the second information to indicate that causality does not exist between the third variable and the fourth variable.

In a possible implementation, the causal prediction module is specifically configured to:

obtain, based on the first information and by using the first neural network in the generative flow model, a probability that causality exists between each of a plurality of variable pairs; and

obtain the second information based on a highest probability that the first causality exists in a variable pair that is in the plurality of variable pairs and that includes the first variable and the second variable.

An embodiment of this application further provides a causality determining apparatus. The apparatus includes: an obtaining module, configured to obtain first information of a plurality of variables, where the first information indicates causality between the plurality of variables, the variable includes an operation type of a user and at least one target variable, and the target variable is at least one of the following:

attribute information of an item and attribute information of the user; and

a causal prediction module, configured to predict second information of the plurality of variables based on the first information and by using a first neural network in a generative flow model, where

the second information indicates that first causality exists between a first variable and a second variable in the plurality of variables, the first information indicates that the first causality does not exist between the first variable and the second variable, and the first variable is different from the second variable.

In a possible implementation, the attribute information of the user includes at least one of the following: a gender, an age, an occupation, an income, a hobby, and an educational level.

In a possible implementation, the attribute information of the item includes at least one of the following: a name of the item, a developer, an installation package size, a category, and a positive rating.

In a possible implementation, the first information indicates that causality exists between X variable pairs in the plurality of variables, and the second information indicates that causality exists between X+1 variable pairs. The X+1 variable pairs include the X variable pairs and a variable pair including the first variable and the second variable.

In a possible implementation, each variable is one of the following:

a feature dimension of image data, a feature dimension of text data, a feature dimension of audio data, and a feature dimension of video data.

In a possible implementation, the apparatus further includes:

a model update module, configured to: obtain a first input flow of the first information based on the first information and by using a second neural network in the generative flow model;

obtain a first output flow of the first information based on the first information and by using a third neural network in the generative flow model, where a degree of difference between the first input flow and the first output flow is used to obtain a loss function; and

update the first neural network, the second neural network, and the third neural network according to the loss function.

In a possible implementation, the model update module is specifically configured to:

obtain a plurality of pieces of third information based on the first information, where the first information indicates that causality exists between variables in M variable pairs, each piece of third information indicates that causality exists between variables in some of the M variable pairs, and M is a positive integer greater than 1; and

obtain the first input flow of the first information based on the plurality of pieces of third information and by using the second neural network in the generative flow model.

In a possible implementation, the some variable pairs are M-1 variable pairs in the M variable pairs.

In a possible implementation, the apparatus further includes:

the model update module, configured to obtain a second reward of the first information based on the first information, where the second reward indicates a coincidence degree of joint distribution of the first information and a dataset of the plurality of variables; and

that a degree of difference between the first input flow and the first output flow is used to construct a loss function includes:
the first input flow and a summation result of the first output flow and the second reward are used to construct the loss function.

In a possible implementation, the apparatus further includes:

the model update module, configured to: obtain a second input flow of the second information by using the second neural network in the generative flow model;
obtain a first reward of the second information based on the second information and by using the third neural network in the generative flow model, where a degree of difference between the second input flow and the first reward is used to construct a loss function; and
update the first neural network, the second neural network, and the third neural network according to the loss function.

In a possible implementation, the obtaining a second input flow of the second information based on the second information and by using the second neural network in the generative flow model includes:

obtaining a plurality of pieces of fourth information based on the first information, where the second information indicates that causality exists between variables in N variable pairs, each piece of fourth information indicates that causality exists between variables in some of the N variable pairs, and N is a positive integer greater than 1; and
obtaining the second input flow of the second information based on the plurality of pieces of fourth information and by using the second neural network in the generative flow model.

In a possible implementation, the model update module is further configured to:
trigger, based on that the second information indicates that causality exists between any variable and at least one variable in the plurality of variables, execution of the step of obtaining the first reward of the second information based on the second information.
In a possible implementation, the second information corresponds to a first graph, each variable corresponds to a node in the first graph, a node corresponding to a variable serving as a dependent variable in the second information points to a node corresponding to a variable serving as an outcome variable, and the model update module is further configured to:
trigger, based on the first graph being a directed cyclic graph, execution of the step of obtaining the first reward of the second information based on the second information.
In a possible implementation, the apparatus further includes:

a constraint obtaining module, configured to obtain a target constraint based on the first information, where the target constraint is used to constrain that causality does not exist between a plurality of variable pairs in the second information; and
the predicting second information of the plurality of variables based on the first information and by using a first neural network in a generative flow model includes:
predicting the second information of the plurality of variables based on the first information and the target constraint and by using the first neural network in the generative flow model.

In a possible implementation, the second information corresponds to the first graph, each variable corresponds to the node in the first graph, the node corresponding to the variable serving as the dependent variable in the second information points to the node corresponding to the variable serving as the outcome variable, and the target constraint is used to constrain the first graph to be a directed acyclic graph.
In a possible implementation, the plurality of variable pairs include a target variable pair, and the target variable pair includes a third variable and a fourth variable.
When the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable; or
when the third variable is the same as the fourth variable, the target constraint constrains the second information to indicate that causality does not exist between the third variable and the fourth variable.
In a possible implementation, the causal prediction module is specifically configured to:

obtain, based on the first information and by using the first neural network in the generative flow model, a probability that causality exists between each of a plurality of variable pairs; and

obtain the second information based on a highest probability that the first causality exists in a variable pair that is in the plurality of variable pairs and that includes the first variable and the second variable.

An embodiment of this application further provides a causality determining apparatus. The apparatus includes:

an obtaining module, configured to obtain first information of a plurality of variables, where the first information indicates causality between the plurality of variables, and the variable includes attribute information of a target object, where

the target object is a chip, and the attribute information is a partial segment or fault information of the chip; or

the target object is a node in a communication network, and a target variable is a key performance indicator KPI, running data, or alarm information of a network element; and

a causal prediction module, configured to predict second information of the plurality of variables based on the first information and by using a first neural network in a generative flow model, where

the second information indicates that first causality exists between a first variable and a second variable in the plurality of variables, the first information indicates that the first causality does not exist between the first variable and the second variable, and the first variable is different from the second variable.

In a possible implementation, the first information indicates that causality exists between X variable pairs in the plurality of variables, and the second information indicates that causality exists between X+1 variable pairs. The X+1 variable pairs include the X variable pairs and a variable pair including the first variable and the second variable.

In a possible implementation, each variable is one of the following:

a feature dimension of image data, a feature dimension of text data, a feature dimension of audio data, and a feature dimension of video data.

In a possible implementation, the apparatus further includes:

a model update module, configured to: obtain a first input flow of the first information based on the first information and by using a second neural network in the generative flow model;

obtain a first output flow of the first information based on the first information and by using a third neural network in the generative flow model, where a degree of difference between the first input flow and the first output flow is used to obtain a loss function; and

update the first neural network, the second neural network, and the third neural network according to the loss function.

In a possible implementation, the model update module is specifically configured to:

obtain a plurality of pieces of third information based on the first information, where the first information indicates that causality exists between variables in M variable pairs, each piece of third information indicates that causality exists between variables in some of the M variable pairs, and M is a positive integer greater than 1; and

obtain the first input flow of the first information based on the plurality of pieces of third information and by using the second neural network in the generative flow model.

In a possible implementation, the some variable pairs are M-1 variable pairs in the M variable pairs.

In a possible implementation, the apparatus further includes:

the model update module, configured to obtain a second reward of the first information based on the first information, where the second reward indicates a coincidence degree of joint distribution of the first information and a dataset of the plurality of variables; and

that a degree of difference between the first input flow and the first output flow is used to construct a loss function includes:

the first input flow and a summation result of the first output flow and the second reward are used to construct the loss function.

In a possible implementation, the apparatus further includes:

the model update module, configured to: obtain a second input flow of the second information by using the second neural network in the generative flow model;

obtain a first reward of the second information based on the second information and by using the third neural network in the generative flow model, where a degree of difference between the second input flow and the first reward is used to construct a loss function; and

update the first neural network, the second neural network, and the third neural network according to the loss function.

In a possible implementation, the obtaining a second input flow of the second information based on the second information and by using the second neural network in the generative flow model includes:

obtaining a plurality of pieces of fourth information based on the first information, where the second information indicates that causality exists between variables in N variable pairs, each piece of fourth information indicates that causality exists between variables in some of the N variable pairs, and N is a positive integer greater than 1; and obtaining the second input flow of the second information based on the plurality of pieces of fourth information and by using the second neural network in the generative flow model.

In a possible implementation, the model update module is further configured to:
trigger, based on that the second information indicates that causality exists between any variable and at least one variable in the plurality of variables, execution of the step of obtaining the first reward of the second information based on the second information.

In a possible implementation, the second information corresponds to a first graph, each variable corresponds to a node in the first graph, a node corresponding to a variable serving as a dependent variable in the second information points to a node corresponding to a variable serving as an outcome variable, and the model update module is further configured to:
trigger, based on the first graph being a directed cyclic graph, execution of the step of obtaining the first reward of the second information based on the second information.

In a possible implementation, the apparatus further includes:

a constraint obtaining module, configured to obtain a target constraint based on the first information, where the target constraint is used to constrain that causality does not exist between a plurality of variable pairs in the second information; and
the predicting second information of the plurality of variables based on the first information and by using a first neural network in a generative flow model includes:
predicting the second information of the plurality of variables based on the first information and the target constraint and by using the first neural network in the generative flow model.

In a possible implementation, the second information corresponds to the first graph, each variable corresponds to the node in the first graph, the node corresponding to the variable serving as the dependent variable in the second information points to the node corresponding to the variable serving as the outcome variable, and the target constraint is used to constrain the first graph to be a directed acyclic graph.

In a possible implementation, the plurality of variable pairs include a target variable pair, and the target variable pair includes a third variable and a fourth variable.

When the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable; or
when the third variable is the same as the fourth variable, the target constraint constrains the second information to indicate that causality does not exist between the third variable and the fourth variable.

In a possible implementation, the causal prediction module is specifically configured to:

obtain, based on the first information and by using the first neural network in the generative flow model, a probability that causality exists between each of a plurality of variable pairs; and
obtain the second information based on a highest probability that the first causality exists in a variable pair that is in the plurality of variable pairs and that includes the first variable and the second variable.

The following describes an execution device provided in an embodiment of this application. FIG. 18 is a schematic diagram of a structure of an execution device according to an embodiment of this application. An execution device 1800 may specifically be represented as a mobile phone, a tablet, a notebook computer, an intelligent wearable device, or the like. This is not limited herein. Specifically, the execution device 1800 includes a receiver 1801, a transmitter 1802, a processor 1803, and a memory 1804 (there may be one or more processors 1803 in the execution device 1800, and one processor is used as an example in FIG. 18). The processor 1803 may include an application processor 18031 and a communication processor 18032. In some embodiments of this application, the receiver 1801, the transmitter 1802, the processor 1803, and the memory 1804 may be connected by using a bus or in another manner.

The memory 1804 may include a read-only memory and a random access memory, and provide instructions and data for the processor 1803. A part of the memory 1804 may further include a non-volatile random access memory (non-volatile random access memory, NVRAM). The memory 1804 stores a processor and operation instructions, an executable module or a data structure, a subnet thereof, or an extended set thereof. The operation instructions may include various operation instructions to implement various operations.

The processor 1803 controls an operation of the execution device. During specific application, components of the execution device are coupled to each other by using a bus system. In addition to a data bus, the bus system may further include a power bus, a control bus, a status signal bus, and the like. However, for clear description, various types of buses in the figure are marked as the bus system.

The method disclosed in the foregoing embodiments of this application may be used in the processor 1803, or implemented by the processor 1803. The processor 1803 may be an integrated circuit chip with a signal processing capability. In an implementation process, steps in the methods can be implemented by using a hardware integrated logical circuit in the processor 1803, or by using instructions in a form of software. The processor 1803 may be a general-purpose processor, a digital signal processor (digital signal processor, DSP), a microprocessor, or a microcontroller. The processor 1803 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 1803 may implement or perform the methods, the steps, and logical block diagrams that are disclosed in embodiments of this application. The general-purpose processor may be a microprocessor, or the processor may be any conventional processor or the like. Steps of the method disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1804, and the processor 1803 reads information in the memory 1804, and completes the steps of the foregoing methods in combination with the hardware in the processor 1803.

The receiver 1801 may be configured to receive input digital or character information, and generate a signal input related to setting and function control of the execution device. The transmitter 1802 may be configured to output digital or character information. The transmitter 1802 may further be configured to send instructions to a disk group, to modify data in the disk group.

In this embodiment of this application, in one case, the processor 1803 is configured to perform steps of the causality determining method in the embodiment corresponding to FIG. 7.

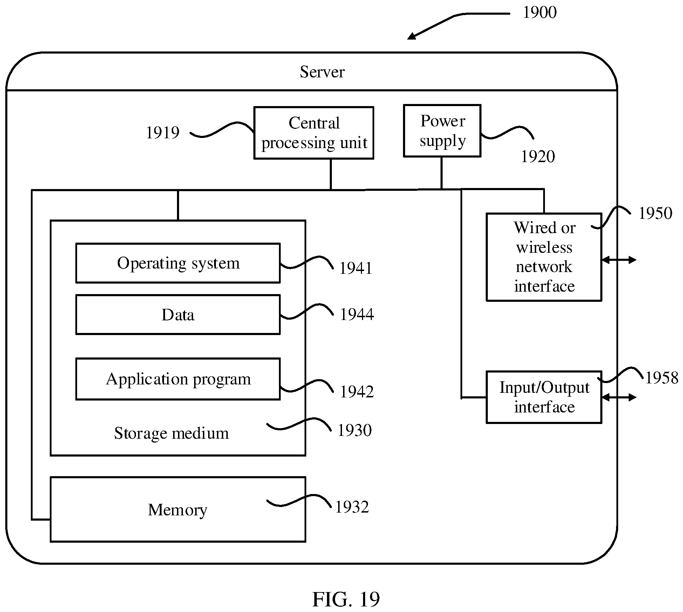

An embodiment of this application further provides a server. FIG. 19 is a schematic diagram of a structure of a server according to an embodiment of this application. Specifically, a server 1900 is implemented by one or more servers. The server 1900 may vary greatly with configuration or performance, and may include one or more central processing units (central processing units, CPU) 1919 (for example, one or more processors), a memory 1932, and one or more storage media 1930 (for example, one or more mass storage devices) that store an application program 1942 or data 1944. The memory 1932 and the storage media 1930 may be used for temporary storage or persistent storage. The program stored in the storage media 1930 may include one or more modules (not shown in the figure), and each module may include a series of instruction operations performed the server. Further, the central processing unit 1919 may be set to communicate with the storage media 1930, and executes, on the server 1900, the series of instruction operations in the storage media 1930.

The server 1900 may further include one or more power supplies 1920, one or more wired or wireless network interfaces 1950, one or more input/output interfaces 1958, or one or more operating systems 1941, for example, Windows Server™, Mac OS X™, Unix™, Linux™, and FreeBSD™.

In this embodiment of this application, the central processing unit 1919 is configured to perform steps of the causality determining method in the embodiment corresponding to FIG. 7.

An embodiment of this application further provides a computer program product including computer-readable instructions. When the computer program product runs on a computer, the computer is enabled to perform steps performed by the execution device or steps performed by the training device.

An embodiment of this application further provides a computer-readable storage medium. The computer-readable storage medium stores a program used for signal processing. When the program is run on a computer, the computer is enabled to perform steps performed by the execution device or steps performed by the training device.

The execution device, the training device, or the terminal device provided in embodiments of this application may specifically be a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the causality determining method described in the foregoing embodiments, or a chip in the training device performs steps related to model training in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

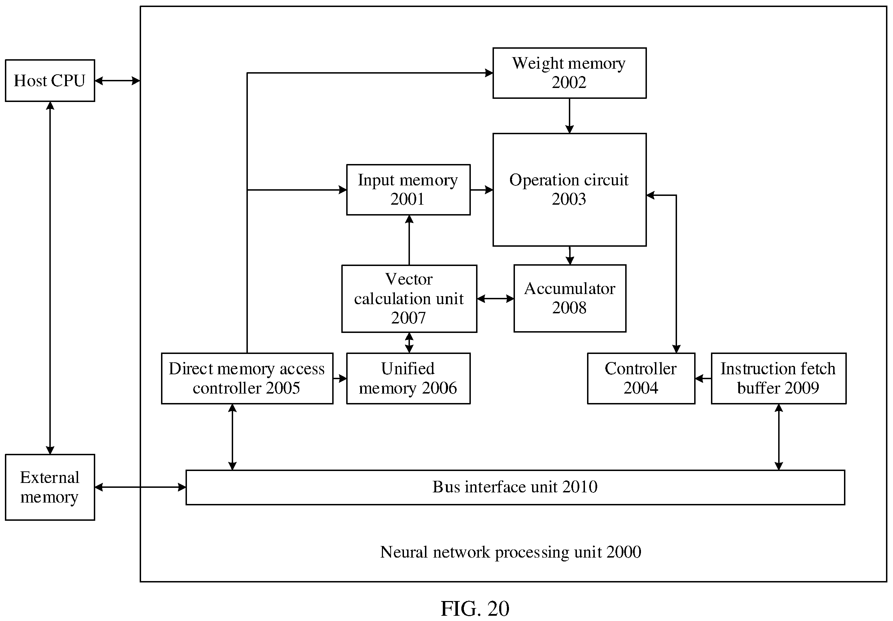

Specifically, FIG. 20 is a schematic diagram of a structure of a chip according to an embodiment of this application. The chip may be represented as a neural network processing unit NPU 2000. The NPU 2000 is mounted to a host CPU (Host CPU) as a coprocessor, and the host CPU allocates a task. A core part of the NPU is an operation circuit 2003, and a controller 2004 controls the operation circuit 2003 to extract matrix data in a memory and perform a multiplication operation.

In some implementations, the operation circuit 2003 includes a plurality of processing elements (Process Engines, PEs). In some implementations, the operation circuit 2003 is a two-dimensional systolic array. Alternatively, the operation circuit 2003 may be a one-dimensional systolic array or another electronic circuit capable of performing mathematic operations such as multiplication and addition. In some implementations, the operation circuit 2003 is a general-purpose matrix processor.

For example, it is assumed that there is an input matrix A, a weight matrix B, and an output matrix C. The operation circuit obtains data corresponding to the matrix B from a weight memory 2002, and buffers the data to each PE in the operation circuit. The operation circuit obtains data of the matrix A from an input memory 2001, and performs a matrix operation on the matrix B and the data of the matrix A. Partial results or final results of a matrix that are obtained are stored in an accumulator (accumulator) 2008.

The unified memory 2006 is configured to store input data and output data. Weight data is directly transferred to the weight memory 2002 through a direct memory access controller (Direct Memory Access Controller, DMAC) 2005. Input data is also transferred to the unified memory 2006 through the DMAC.

A BIU is a bus interface unit, namely, a bus interface unit 2010, and is used for interaction between an AXI bus, and the DMAC and an instruction fetch buffer (Instruction Fetch Buffer, IFB) 2009.

The bus interface unit (Bus Interface Unit, BIU for short) 2010 is used for the instruction fetch buffer 2009 to obtain instructions from an external memory, and is further used for the direct memory access controller 2005 to obtain original data of the input matrix A or the weight matrix B from the external memory.

The DMAC is mainly configured to transfer input data in the external memory DDR to the unified memory 2006, transfer weight data to the weight memory 2002, or transfer input data to the input memory 2001.

A vector calculation unit 2007 includes a plurality of operation processing units, and if required, performs further processing, for example, vector multiplication, vector addition, an exponential operation, a logarithm operation, or a magnitude comparison, on output of the operation circuit. The vector calculation unit 1007 is mainly used for the non-convolutional or fully connected layer network calculation in a neural network, such as batch normalization (batch normalization), pixel-level summation, and upsampling of a feature map.

In some implementations, the vector calculation unit 2007 can store a vector of processed output to the unified memory 2006. For example, the vector calculation unit 2007 may apply a linear function or a nonlinear function to the output of the operation circuit 2003, for example, perform linear interpolation on a feature plane extracted at a convolutional layer. For another example, the linear function or the nonlinear function is applied to a vector of an accumulated value to generate an activation value. In some implementations, the vector calculation unit 2007 generates a normalized value, a value obtained through pixel-level summation, or both. In some implementations, the vector of the processed output can be used as activation input to the operation circuit 2003, for example, for use at a subsequent layer of the neural network.

The instruction fetch buffer (instruction fetch buffer) 2009 connected to the controller 2004 is configured to store instructions to be used by the controller 2004.

The unified memory 2006, the input memory 2001, the weight memory 2002, and the instruction fetch buffer 2009 are all on-chip memories. The external memory is private for the NPU hardware architecture.

The processor mentioned above may be a general-purpose central processing unit, a microprocessor, an ASIC, or one or more integrated circuits for controlling program execution.

In addition, it should be noted that the described apparatus embodiments are merely an example. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1. A causality determining method, wherein the method comprises:

   obtaining first information of a plurality of variables, wherein the first information indicates causality between the plurality of variables; and
   predicting second information of the plurality of variables based on the first information and by using a first neural network in a generative flow model, wherein
   the second information indicates that first causality exists between a first variable and a second variable in the plurality of variables, the first information indicates that the first causality does not exist between the first variable and the second variable, and the first variable is different from the second variable.

2. The method according to claim 1, wherein each variable is one of the following:
   a feature dimension of image data, a feature dimension of text data, a feature dimension of audio data, and a feature dimension of video data.

3. The method according to claim 1 or 2, wherein the method further comprises:

   obtaining a first input flow of the first information based on the first information and by using a second neural network in the generative flow model;
   obtaining a first output flow of the first information based on the first information and by using a third neural network in the generative flow model, wherein a degree of difference between the first input flow and the first output flow is used to obtain a loss function; and
   updating the first neural network, the second neural network, and the third neural network according to the loss function.

4. The method according to claim 3, wherein the obtaining a first input flow of the first information based on the first information and by using a second neural network in the generative flow model comprises:

   obtaining a plurality of pieces of third information based on the first information, wherein the first information indicates that causality exists between variables in M variable pairs, each piece of third information indicates that causality exists between variables in some of the M variable pairs, and M is a positive integer greater than 1; and
   obtaining the first input flow of the first information based on the plurality of pieces of third information and by using the second neural network in the generative flow model.

5. The method according to claim 3 or 4, wherein the some variable pairs are M-1 variable pairs in the M variable pairs.

6. The method according to any one of claims 3 to 5, wherein the method further comprises:

   obtaining a second reward of the first information based on the first information, wherein the second reward indicates a coincidence degree of joint distribution of the first information and a dataset of the plurality of variables; and
   that a degree of difference between the first input flow and the first output flow is used to construct a loss function comprises:
   the first input flow and a summation result of the first output flow and the second reward are used to construct the loss function.

7. The method according to any one of claims 1 to 5, wherein the method further comprises:

   obtaining a second input flow of the second information based on the second information and by using the second neural network in the generative flow model;
   obtaining a first reward of the second information based on the second information and by using the third neural network in the generative flow model, wherein a degree of difference between the second input flow and the first reward is used to construct a loss function; and
   updating the first neural network, the second neural network, and the third neural network according to the loss function.

8. The method according to any one of claims 1 to 7, wherein the obtaining a second input flow of the second information based on the second information and by using the second neural network in the generative flow model comprises:

   obtaining a plurality of pieces of fourth information based on the first information, wherein the second information indicates that causality exists between variables in N variable pairs, each piece of fourth information indicates that causality exists between variables in some of the N variable pairs, and N is a positive integer greater than 1; and
   obtaining the second input flow of the second information based on the plurality of pieces of fourth information and by using the second neural network in the generative flow model.

9. The method according to any one of claims 1 to 8, wherein the method further comprises:
   triggering, based on that the second information indicates that causality exists between any variable and at least one variable in the plurality of variables, execution of the step of obtaining the first reward of the second information based on the second information.

10. The method according to any one of claims 1 to 9, wherein the second information corresponds to a first graph, each variable corresponds to a node in the first graph, a node corresponding to a variable serving as a dependent variable in the second information points to a node corresponding to a variable serving as an outcome variable, and the method further comprises:
    triggering, based on the first graph being a directed cyclic graph, execution of the step of obtaining the first reward of the second information based on the second information.

11. The method according to any one of claims 1 to 10, wherein the method further comprises:

    obtaining a target constraint based on the first information, wherein the target constraint is used to constrain that causality does not exist between a plurality of variable pairs in the second information; and
    the predicting second information of the plurality of variables based on the first information and by using a first neural network in a generative flow model comprises:
    predicting the second information of the plurality of variables based on the first information and the target constraint and by using the first neural network in the generative flow model.

12. The method according to claim 11, wherein the second information corresponds to the first graph, each variable corresponds to the node in the first graph, the node corresponding to the variable serving as the dependent variable in the second information points to the node corresponding to the variable serving as the outcome variable, and the target constraint is used to constrain the first graph to be a directed acyclic graph.

13. The method according to claim 11 or 12, wherein the plurality of variable pairs comprise a target variable pair, and the target variable pair comprises a third variable and a fourth variable; and

when the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable; or

when the third variable is the same as the fourth variable, the target constraint constrains the second information to indicate that causality does not exist between the third variable and the fourth variable.

14. The method according to any one of claims 1 to 13, wherein the predicting the second information of the plurality of variables based on the first information and by using the first neural network in the generative flow model comprises:

obtaining, based on the first information and by using the first neural network in the generative flow model, a probability that causality exists between each of a plurality of variable pairs; and

obtaining the second information based on a highest probability that the first causality exists in a variable pair that is in the plurality of variable pairs and that comprises the first variable and the second variable.

15. A causality determining apparatus, wherein the apparatus comprises:

an obtaining module, configured to obtain first information of a plurality of variables, wherein the first information indicates causality between the plurality of variables; and

a causal prediction module, configured to predict second information of the plurality of variables based on the first information and by using a first neural network in a generative flow model, wherein

the second information indicates that first causality exists between a first variable and a second variable in the plurality of variables, the first information indicates that the first causality does not exist between the first variable and the second variable, and the first variable is different from the second variable.

16. The apparatus according to claim 15, wherein each variable is one of the following:

a feature dimension of image data, a feature dimension of text data, a feature dimension of audio data, and a feature dimension of video data.

17. The apparatus according to claim 15 or 16, wherein the apparatus further comprises:

a model update module, configured to: obtain a first input flow of the first information based on the first information and by using a second neural network in the generative flow model;

obtain a first output flow of the first information based on the first information and by using a third neural network in the generative flow model, wherein a degree of difference between the first input flow and the first output flow is used to obtain a loss function; and

update the first neural network, the second neural network, and the third neural network according to the loss function.

18. The apparatus according to claim 17, wherein the model update module is specifically configured to:

obtain a plurality of pieces of third information based on the first information, wherein the first information indicates that causality exists between variables in M variable pairs, each piece of third information indicates that causality exists between variables in some of the M variable pairs, and M is a positive integer greater than 1; and

obtain the first input flow of the first information based on the plurality of pieces of third information and by using the second neural network in the generative flow model.

19. The apparatus according to claim 17 or 18, wherein the some variable pairs are M-1 variable pairs in the M variable pairs.

20. The apparatus according to any one of claims 17 to 19, wherein the apparatus further comprises:

the model update module, configured to obtain a second reward of the first information based on the first information, wherein the second reward indicates a coincidence degree of joint distribution of the first information and a dataset of the plurality of variables; and

that a degree of difference between the first input flow and the first output flow is used to construct a loss function comprises:
the first input flow and a summation result of the first output flow and the second reward are used to construct the loss function.

21. The apparatus according to any one of claims 15 to 20, wherein the apparatus further comprises:

the model update module, configured to: obtain a second input flow of the second information by using the second neural network in the generative flow model;
obtain a first reward of the second information based on the second information and by using the third neural network in the generative flow model, wherein a degree of difference between the second input flow and the first reward is used to construct a loss function; and
update the first neural network, the second neural network, and the third neural network according to the loss function.

22. The apparatus according to any one of claims 15 to 21, wherein the obtaining a second input flow of the second information based on the second information and by using the second neural network in the generative flow model comprises:

obtaining a plurality of pieces of fourth information based on the first information, wherein the second information indicates that causality exists between variables in N variable pairs, each piece of fourth information indicates that causality exists between variables in some of the N variable pairs, and N is a positive integer greater than 1; and
obtaining the second input flow of the second information based on the plurality of pieces of fourth information and by using the second neural network in the generative flow model.

23. The apparatus according to any one of claims 15 to 22, wherein the model update module is further configured to:
trigger, based on that the second information indicates that causality exists between any variable and at least one variable in the plurality of variables, execution of the step of obtaining the first reward of the second information based on the second information.

24. The apparatus according to any one of claims 15 to 23, wherein the second information corresponds to a first graph, each variable corresponds to a node in the first graph, a node corresponding to a variable serving as a dependent variable in the second information points to a node corresponding to a variable serving as an outcome variable, and the model update module is specifically configured to:
trigger, based on the first graph being a directed cyclic graph, execution of the step of obtaining the first reward of the second information based on the second information.

25. The apparatus according to any one of claims 15 to 24, wherein the apparatus further comprises:

a constraint obtaining module, configured to obtain a target constraint based on the first information, wherein the target constraint is used to constrain that causality does not exist between a plurality of variable pairs in the second information; and
the predicting second information of the plurality of variables based on the first information and by using a first neural network in a generative flow model comprises:
predicting the second information of the plurality of variables based on the first information and the target constraint and by using the first neural network in the generative flow model.

26. The apparatus according to claim 25, wherein the second information corresponds to the first graph, each variable corresponds to the node in the first graph, the node corresponding to the variable serving as the dependent variable in the second information points to the node corresponding to the variable serving as the outcome variable, and the target constraint is used to constrain the first graph to be a directed acyclic graph.

27. The apparatus according to claim 25 or 26, wherein the plurality of variable pairs comprise a target variable pair, and the target variable pair comprises a third variable and a fourth variable; and

when the first information indicates that the third variable serves as a dependent variable of the fourth variable, and the fourth variable serves as an outcome variable of the third variable, the target constraint constrains the second information to indicate that the third variable does not serve as an outcome variable of the fourth variable, and the fourth variable does not serve as a dependent variable of the third variable; or

when the third variable is the same as the fourth variable, the target constraint constrains the second information to indicate that causality does not exist between the third variable and the fourth variable.

28. The apparatus according to any one of claims 15 to 27, wherein the causal prediction module is specifically configured to:

obtain, based on the first information and by using the first neural network in the generative flow model, a probability that causality exists between each of a plurality of variable pairs; and
obtain the second information based on a highest probability that the first causality exists in a variable pair that is in the plurality of variable pairs and that comprises the first variable and the second variable.

29. A causality determining apparatus, wherein the apparatus comprises a memory and a processor, the memory stores code, and the processor is configured to obtain the code and perform the method according to any one of claims 1 to 14.

30. A computer-readable storage medium, comprising computer-readable instructions, wherein when the computer-readable instructions are run on a computer device, the computer device is enabled to perform the method according to any one of claims 1 to 14.

31. A computer program product, comprising computer-readable instructions, wherein when the computer-readable instructions are run on a computer device, the computer device is enabled to perform the method according to any one of claims 1 to 14.

102

101

Data →

Causality identification
application program

103

Causality
identification
result

FIG. 1

Data →

Causality identification result ←

Terminal 100

Server 200

FIG. 2

Terminal 100

FIG. 3

FIG. 4

FIG. 5

FIG. 6

Obtain first information of a plurality of variables, where the first information indicates causality between the plurality of variables

701

Predict second information of the plurality of variables based on the first information and by using a first neural network in a generative model, where the second information indicates that first causality exists between a first variable and a second variable in the plurality of variables, the first information indicates that the first causality does not exist between the first variable and the second variable, and the first variable is different from the second variable

702

FIG. 7

$R(G_1)$

$S_f$

$(v_1, v_2, v_3, v_4)$

$v_1$ $v_2$ $v_3$ $v_4$

$S_0$

...

$S_f$

$R(G_2)$

$(v_4, v_1, v_2, v_3)$

$v_1$ $v_2$ $v_3$ $v_4$

FIG. 8

First information

Variable 1 Variable 2 Variable 3

Target constraint

Variable 1  Variable 2 Variable 3

Variable 1

Variable 2

Variable 3

Variable 1

Variable 2

Variable 3

## FIG. 9

$v_1$     $v_2$     $v_3$     $v_4$

True graph

$A_1$

| 0 | 0 | 0 | 0 |
|---|---|---|---|
| 1 | 0 | 0 | 0 |
| 0 | 1 | 0 | 0 |
| 0 | 0 | 1 | 0 |

$v_1$     $v_2$     $v_3$     $v_4$

Transitive closure

$A_2$

| 1 | 0 | 0 | 0 |
|---|---|---|---|
| 1 | 1 | 0 | 0 |
| 1 | 1 | 1 | 0 |
| 1 | 1 | 1 | 1 |

## FIG. 10

Updated masked matrix

| 1 | 1 | 1 | 1 |
|---|---|---|---|
| 1 | 1 | 1 | 1 |
| 0 | 1 | 1 | 1 |
| 0 | 0 | 1 | 1 |

## FIG. 11

FIG. 12

Third information 1

Variable 1  Variable 2  Variable 3

Variable 1

First information

Variable 2

Variable 3

Variable 1 Variable 2  Variable 3

Variable 1

Third information 2

Variable 2

Variable 1  Variable 2 Variable 3

Variable 3

Variable 1

Variable 2

Variable 3

FIG. 13

FIG. 14

FIG. 15

FIG. 16

1700

Obtaining module 1701

Causal prediction module 1702

Model update module 1703

FIG. 17

1800

Execution device

Antenna

Antenna

Receiver 1801

Transmitter 1802

Processor 1803

Memory 1804

Application processor 18031

Communication processor 18032

FIG. 18

1900

Server

1919 — Central processing unit

Power supply

1920

Operating system — 1941

Data — 1944

Application program — 1942

Storage medium — 1930

Memory — 1932

Wired or wireless network interface — 1950

Input/Output interface — 1958

FIG. 19

FIG. 20

<table>
<tr><td colspan="2" align="center">**INTERNATIONAL SEARCH REPORT**</td><td colspan="2">International application No.<br>**PCT/CN2023/092961**</td></tr>
</table>

**A.     CLASSIFICATION OF SUBJECT MATTER**

G06N 3/08(2023.01)i;   G06N 3/063(2023.01)i;   G06N 3/04(2023.01)i

According to International Patent Classification (IPC) or to both national classification and IPC

**B.     FIELDS SEARCHED**

Minimum documentation searched (classification system followed by classification symbols)

IPC:  G06N

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 因果, 原因, 结果, 变量, 关系, 预测, 推断, 挖掘, 神经网络, cause, effect, causality, causation, variable, relation, predict, reasoning, mining, neural network

**C.     DOCUMENTS CONSIDERED TO BE RELEVANT**

| Category* | Citation of document, with indication, where appropriate, of the relevant passages | Relevant to claim No. |
|---|---|---|
| PX | CN 115034379 A (HUAWEI TECHNOLOGIES CO., LTD.) 09 September 2022 (2022-09-09)<br>claims 1-31, and description, paragraphs [0002]-[0620] | 1-31 |
| X | CN 113159292 A (GUANGDONG UNIVERSITY OF TECHNOLOGY) 23 July 2021 (2021-07-23)<br>description, paragraphs [0071]-[0119] | 1, 2, 14-16, 28-31 |
| A | CN 113159292 A (GUANGDONG UNIVERSITY OF TECHNOLOGY) 23 July 2021 (2021-07-23)<br>entire document | 3-13, 17-27 |
| A | CN 112307268 A (BABYLON PARTNERS LTD) 02 February 2021 (2021-02-02)<br>entire document | 1-31 |
| A | CN 111709225 A (BEIJING MININGLAMP SOFTWARE SYSTEM CO., LTD.) 25 September 2020 (2020-09-25)<br>entire document | 1-31 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2023** | **30 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/092961**

| Patent document cited in search report | | | Publication date (day/month/year) | Patent family member(s) | | | Publication date (day/month/year) |
|---|---|---|---|---|---|---|---|
| CN | 115034379 | A | 09 September 2022 | None | | | |
| CN | 113159292 | A | 23 July 2021 | None | | | |
| CN | 112307268 | A | 02 February 2021 | US | 10706104 | B1 | 07 July 2020 |
| | | | | EP | 3770920 | A1 | 27 January 2021 |
| CN | 111709225 | A | 25 September 2020 | None | | | |

Form PCT/ISA/210 (patent family annex) (July 2022)

**EP 4 513 384 A1**

**Patent documents cited in the description**

- CN 202210521841